# EUROPEAN PATENT APPLICATION

(11) **EP 4 492 008 A1**
(43) Date of publication of application: **15.01.2025**
(21) Application number: 24184040.4
(22) Date of filing: 24.06.2024
(51) Int. Cl.: G01C 21/20, B63B 49/00, B63B 79/40

(54) **AUTOMATIC ROUTE GENERATION APPARATUS, AUTOMATIC ROUTE GENERATION METHOD, AUTOMATIC ROUTE GENERATION PROGRAM, AND WATERCRAFT**

(30) Priority: 11.07.2023 JP 2023113710
(71) Applicant: Yanmar Holdings Co., Ltd., Osaka-shi, Osaka (JP)
(72) Inventor: DAKE, Yuichiro, Osaka (JP); MIKI, Yonosuke, Osaka (JP); WADA, Suisei, Osaka (JP); HARA, Naohiro, Osaka (JP); KIMURA, Tomohiro, osaka (JP); MINAMIYAMA, Satoshi, Osaka (JP)
(74) Representative: Novagraaf International SA

(57) **Abstract**

[Problem] The present invention enables generation of a seamless route from unberthing to berthing of a watercraft through offshore navigation.

[Solution]An automatic route generation apparatus includes: an acquisition unit that acquires route generation information including a berthing location, an unberthing location, a first point away from the unberthing location, and a second point away from the berthing location of a watercraft; and a generation unit that generates a route of the watercraft on the basis of the route generation information acquired by the acquisition unit.

## Description

### TECHNICAL FIELD

The present invention relates to an automatic route generation apparatus that automatically generates a route of a watercraft, an automatic route generation method, an automatic route generation program, and a watercraft including the automatic route generation apparatus.

### BACKGROUND ART

Conventionally, a technique related to automatic offshore navigation of a watercraft has been proposed (for example, see Patent Document 1).

### PRIOR ART DOCUMENT

### PATENT DOCUMENT

Patent Document 1: Japanese Unexamined Patent Application Publication No. 2014-215196

### SUMMARY OF INVENTION

### TECHNICAL PROBLEM

In recent years, efforts have been made not only for the automatic offshore navigation but also for automatic berthing/unberthing of the watercraft. However, almost no effort has been made for linkage between the automatic offshore navigation and the automatic berthing/unberthing. For example, conventionally, simultaneous settings of an offshore navigation route and berthing/unberthing routes have not been studied at all.

The present invention has been made to solve the above problem, and an object thereof is to provide an automatic route generation apparatus capable of generating a seamless (consecutive) route from unberthing of a watercraft to berthing thereof through navigation on the sea, an automatic route generation method, an automatic route generation program, and a watercraft including the automatic route generation apparatus.

### SOLUTION TO PROBLEM

An automatic route generation apparatus according to one aspect of the present invention includes: an acquisition unit that acquires route generation information including a berthing location, an unberthing location, a first point away from the unberthing location, and a second point away from the berthing location of a watercraft; and a generation unit that generates a route of the watercraft on the basis of the route generation information acquired by the acquisition unit.

An automatic route generation method according to another aspect of the present invention includes: an acquisition step of acquiring route generation information by an acquisition unit, the route generation information including a berthing location, an unberthing location, a first point away from the unberthing location, a second point away from the berthing location of a watercraft; and a route generation step of generating a route of the watercraft by a generation unit on the basis of the route generation information acquired by the acquisition unit.

An automatic route generation program according to further another aspect of the present invention is a program that causes a computer to execute the automatic route generation method.

A watercraft according to further another aspect of the present invention includes the automatic route navigation apparatus.

### ADVANTAGEOUS EFFECTS OF INVENTION

With the above configuration, it is possible to generate the seamless (consecutive) route from unberthing to berthing of the watercraft through navigation on the sea on the basis of four points for the watercraft (the berthing location, the unberthing location, the first point, and the second point).

### BRIEF DESCRIPTION OF DRAWINGS

FIG. 1 is a block diagram illustrating a schematic configuration of a watercraft according to an embodiment of the present invention.
FIG. 2 is an explanatory view illustrating each display area of a display unit in an automatic route generation apparatus provided in the watercraft.
FIG. 3 is an explanatory view illustrating an example of information that is displayed in a first state display area of the display unit.
FIG. 4 is an explanatory view illustrating an example of transition of information that is displayed in a control panel display area of the display unit.
FIG. 5 is an explanatory view illustrating an example of information that is displayed in a second state display area of the display unit.
FIG. 6 is an explanatory view illustrating an example of information that is displayed in a route display area of the display unit.
FIG. 7 is an explanatory view illustrating an example of information that is displayed in a risk prediction display area of the display unit.
FIG. 8 is an explanatory table that defines colors of the information displayed in the risk prediction display area.
FIG. 9 is an explanatory view illustrating examples of a display tag in an offshore navigation mode and a berthing/unberthing mode.
FIG. 10 is an explanatory view schematically illustrating an example of a route in the offshore navigation mode.
FIG. 11 is an explanatory view schematically illustrating a route in the berthing/unberthing mode.
FIG. 12 is an explanatory view schematically illustrating moored states of the watercraft along a pier.
FIG. 13 is an explanatory view illustrating an example of an automatic navigation home menu that is displayed in the risk prediction display area.
FIG. 14 is a flowchart illustrating a flow of creating a new route.
FIG. 15A is an explanatory view illustrating an example of a display screen in the display unit at the time when a berthing location is specified in the creation of the new route.
FIG. 15B is an explanatory view illustrating an example of the display screen in the display unit at the time when an unberthing location is specified in the creation of the new route.
FIG. 15C is an explanatory view illustrating an example of the display screen in the display unit at the time when an offshore navigation start location is specified in the creation of the new route.
FIG. 15D is an explanatory view illustrating an example of a display screen in the display unit at the time when an offshore navigation end location is specified in the creation of the new route.
FIG. 15E is an explanatory view illustrating a seamless route from unberthing to berthing that is displayed on the display unit.
FIG. 15F is an explanatory view illustrating an example of route history that is displayed on the display unit.
FIG. 16A is an explanatory view illustrating plural routes that are read from a route storage unit in the automatic route generation apparatus and are displayed on the display unit.
FIG. 16B is an explanatory view illustrating a route that is selected by a user from the plural routes.
FIG. 17A is an explanatory view illustrating an example of a display screen at the time when a route is set from the route history.
FIG. 17B is an explanatory view illustrating a display screen at the time when the user selects a predetermined route from the route history.
FIG. 17C is an explanatory view illustrating a display screen of the route that is selected by the user.
FIG. 18A is an explanatory view illustrating an example of a display screen at the time when the route history is edited.
FIG. 18B is an explanatory view schematically illustrating a situation when a predetermined route is deleted from the route history.
FIG. 18C is an explanatory view schematically illustrating a situation when the user selects and registers a predetermined route.
FIG. 18D is an explanatory view illustrating a display screen at the time when the user touches a registration button.
FIG. 19 is an explanatory view illustrating transition of display screens when the berthing/unberthing location is modified.
FIG. 20 is an explanatory view illustrating a display screen when a bow azimuth is modified.
FIG. 21 is an explanatory view illustrating transition of display screens when the offshore navigation start location and end location are modified.
FIG. 22 is an explanatory view illustrating transition of display screens when a way point of a berthing/unberthing route is directly modified.
FIG. 23 is an explanatory view illustrating transition of display screens when a way line of the berthing/unberthing route is directly modified.
FIG. 24A is an explanatory view schematically illustrating a situation where the user selects a way point to be modified in the offshore navigation route.
FIG. 24B is an explanatory view illustrating a display screen at the time when the user selects the way point to be modified.
FIG. 24C is an explanatory view schematically illustrating a situation where the user specifies a new way point.
FIG. 24D is an explanatory view illustrating a display screen at the time when the user has specified the above way point.
FIG. 24E is an explanatory view illustrating a display screen at the time when a location of the way point is modified.
FIG. 25A is an explanatory view schematically illustrating a situation where the user selects a way point to be modified in the offshore navigation route.
FIG. 25B is an explanatory view illustrating a display screen at the time when the user selects the way point to be modified.
FIG. 25C is an explanatory view schematically illustrating a situation where the user specifies a new way point.
FIG. 25D is an explanatory view illustrating a new way line that is created by specifying the above way point.
FIG. 25E is an explanatory view illustrating a display screen at the time when a location of the way point is modified.
FIG. 26A is an explanatory view illustrating an initial screen at the time when a navigation prohibition area is set.
FIG. 26B is an explanatory view illustrating a display screen of a message that prompts specification of the navigation prohibition area.
FIG. 26C is an explanatory view illustrating a display screen of the specified navigation prohibition area.
FIG. 27A is an explanatory view schematically illustrating a state where the navigation prohibition area overlaps the route.
FIG. 27B is an explanatory view schematically illustrating an avoidance route for avoiding the navigation prohibition area.
FIG. 28A is an explanatory view illustrating a display screen that displays a route during normal navigation.
FIG. 28B is an explanatory view illustrating a display screen that displays an avoidance route for avoiding an obstacle.
FIG. 28C is an explanatory view illustrating a display screen at the time when the user selects the avoidance route.
FIG. 28D is an explanatory view illustrating a display screen at the time when the user does not select the avoidance route.
FIG. 28E is an explanatory view illustrating a display screen at the time when the user selects to stop the watercraft.
FIG. 29A is an explanatory view schematically illustrating a demonstration screen during navigation in an unberthing section.
FIG. 29B is an explanatory view schematically illustrating a demonstration screen during navigation in an offshore navigation section.
FIG. 30A is an explanatory view illustrating a display screen that displays an image acquired by a telescopic camera on the watercraft.
FIG. 30B is an explanatory view illustrating a display screen that displays a bird's-eye view of the image illustrated in FIG. 30A.
FIG. 30C is an explanatory view illustrating another display mode of the bird's-eye view.
FIG. 31A is an explanatory view illustrating a display screen that displays another image acquired by the telescopic camera.
FIG. 31B is an explanatory view illustrating a display screen that displays a bird's-eye view of the image illustrated in FIG. 31A.
FIG. 32 is an explanatory view illustrating a state where risk information is displayed in both the bird's-eye view and a time-series bar on the display screen of the display unit.
FIG. 33 is an explanatory view illustrating the display screen at a future location of the watercraft.
FIG. 34 is an explanatory view illustrating the display screen at another future location of the watercraft.
FIG. 35 is an explanatory view illustrating a display screen at the time when an obstacle area included in the display screen of FIG. 32 is enlarged for display.

### DESCRIPTION OF EMBODIMENTS

A description will hereinafter be made on an embodiment of the present invention with reference to the drawings.

### [1. Overview of Watercraft]

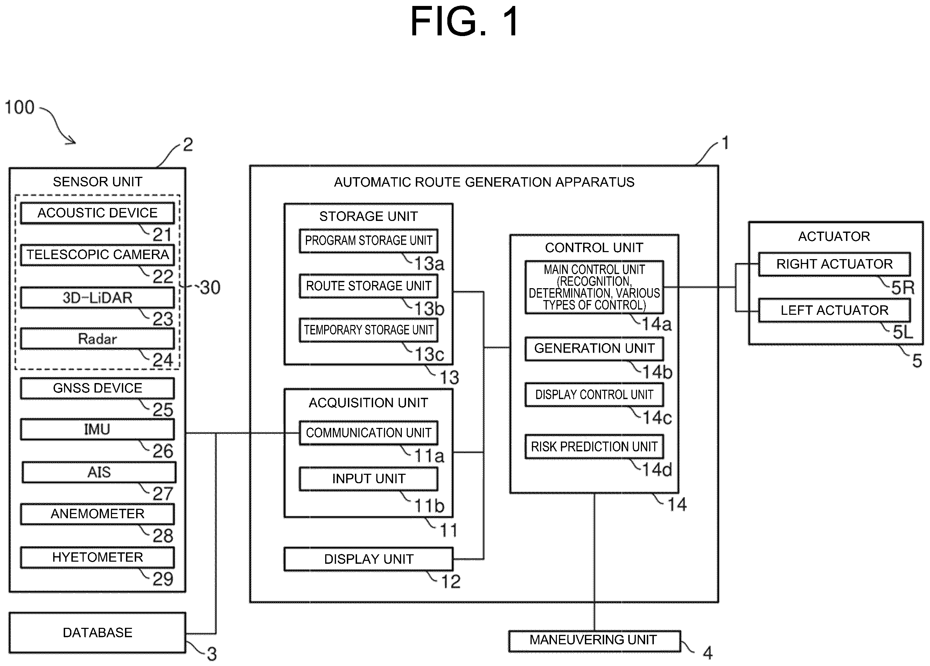

FIG. 1 is a block diagram illustrating a schematic configuration of a watercraft 100 according to the present embodiment. An automatic route generation apparatus 1 is mounted on the watercraft 100. The automatic route generation apparatus 1 has, as operation modes, an automatic navigation mode and a manual navigation mode. When the automatic navigation mode is set, the automatic route generation apparatus 1 automatically generates a route of the watercraft 100 and automatically navigates the watercraft 100 along the generated route. Meanwhile, when the manual navigation mode is set, that is, when the automatic navigation mode is canceled, the automatic route generation apparatus 1 navigates the watercraft 100 with a maneuver by a user (for example, a watercraft operator) on the basis of the user's maneuver of a maneuvering unit 4. Just as described, the watercraft 100 in the present embodiment includes the automatic route generation apparatus 1.

The automatic route generation apparatus 1 may be provided integrally with the watercraft 100 or may be provided separately from the watercraft 100. In the latter case, the automatic route generation apparatus 1 may be configured as a portable communication terminal and communicate with the watercraft 100 in a wired or wireless manner. A laptop computer, a tablet computer, or the like can be used as the communication terminal.

In the present embodiment, the automatic navigation includes not only a case of the automatic navigation in an offshore section but also a case of the automatic navigation in an unberthing section and a berthing section. Here, the offshore section means a section from a start location (a start point location) to an end location (an end point location) of offshore navigation. The term "offshore" means a location on the sea that is far away from the land. The unberthing section means a section from an unberthing location to the offshore navigation start location. The berthing section means a section from the offshore navigation end location to the berthing location.

The unberthing location means a location (a departure location) where the watercraft 100 is berthed before a start of the navigation. The berthing location means a location (an arrival location or a destination) where the watercraft 100 is berthed after the end of the navigation. The watercraft 100 can be brought to any place as long as the watercraft 100 can be berthed, and such a place may include a natural object or an artificial object. More specifically, the place where the watercraft 100 is berthed includes a pier, a floating pier, a quay, a cargo area, and the like.

A type of the watercraft 100 is not particularly limited. For example, the watercraft 100 may be a cargo ship, a fishing boat, a tourist ship, a passenger ship, a pleasure boat, or the like.

### [2. Configuration of Watercraft (Other Than Automatic Route Generation Apparatus)]

The watercraft 100 includes a sensor unit 2. The sensor unit 2 includes an acoustic device 21, a telescopic camera 22, a 3D-Light Detection and Ranging (3D-LiDAR) 23, a Radio Detecting and Ranging (Radar) 24, a Global Navigation Satellite System (GNSS) device 25, an inertial measurement unit (IMU) 26, an automatic identification system (AIS) 27, an anemometer 28, and a hyetometer 29.

The acoustic device 21 measures a location of a surrounding watercraft, obstacle, or the like on the sea by using ultrasonic waves.

The telescopic camera 22 is configured by a multi-camera array, for example. The multi-camera array is configured by arranging nine cameras having a narrow angle of view (for example, an angle of view of 15° to 20°) in a circumferential direction. As a result, it is possible to acquire a captured image in a range of 90° in a right-left direction (180° in total in the circumferential direction) with the front being a center. The number of the cameras constituting the multi-camera array is not limited to nine but only needs to be set appropriately. The captured image may be a still image that is acquired by imaging in a predetermined cycle, or may be a video that is acquired by continuous imaging.

The 3D-LiDAR 23 emits pulsed light and thereby detects presence or absence of a surrounding object (including the obstacle) with reflected light. When the object is present in the surroundings, the 3D-LiDAR 23 detects an azimuth of and a distance to the object on the basis of a direction of the pulsed light at the time of receiving the reflected light and a time until the light is received. The 3D-LiDAR 23 is configured by three-dimensional LiDAR that performs angular scanning in a yaw direction (a right-left azimuth angle direction) and a pitch direction (a front-rear tilt angle direction). Accordingly, when the surrounding object is present, the 3D-LiDAR 23 outputs three-dimensional point cloud data that represents the object.

The Radar 24 detects the surrounding object by using a radio wave, a wavelength of which is longer than that of visible light, and measures the distance to the surrounding object. More specifically, the Radar 24 measures a distance to a far object on the basis of a time from emission of the radio wave to the far object to reception of the reflected wave.

The 3D-LiDAR 23 uses an electromagnetic wave, a wavelength of which is much shorter than that of the radio wave used by the Radar 24. For example, ultraviolet light, visible light, near-infrared light, or the like is used. Accordingly, although the 3D-LiDAR 23 has a narrower object detection range than the Radar 24, the 3D-LiDAR 23 can detect the surrounding object at high resolution. On the contrary, the Radar 24 can detect the surrounding object coarsely over a wide range.

The GNSS device 25 receives GNSS radio waves from a satellite and performs a known positioning calculation to acquire information on a current location of the watercraft 100. The GNSS positioning may be independent positioning. However, by further using real-time kinematic (RTK) positioning, the location information of the watercraft 100 can be acquired with a high degree of accuracy.

The IMU 26 is an inertial measurement unit that includes a three-axis gyroscopic sensor and a three-direction accelerometer. By detecting a three-dimensional angular velocity and three-dimensional acceleration, the IMU 26 can detect attitude information of the watercraft 100. The attitude information includes location information in each of the yaw direction, the pitch direction, and a roll direction (a right-left tilt angle direction) of the watercraft 100.

The AIS 27 is an automatic watercraft identification system. In detail, the AIS 27 automatically transmits/receives information on an identification mark, the type, the location, a course, a speed, a navigation state, and other safety-related information of the watercraft 100 by very-high frequency (VHF) band radio waves. In this way, the information is exchanged between ship stations and between the ship station and a navigation service facility of a land station or the like. The anemometer 28 is installed on the watercraft 100 to measure a wind direction and a wind speed. The hyetometer 29 is installed on the watercraft 100 to measure a quantity of precipitation.

The acoustic device 21, the 3D-LiDAR 23, and the Radar 24 are examples of an obstacle detection unit 30 that detects an obstacle in front of the watercraft 100. Alternatively, for example, the telescopic camera 22 may have an image recognition function and detect the presence or the absence of the obstacle from the captured image by image recognition. In this case, the telescopic camera 22 can also constitute the obstacle detection unit 30. The image recognition may be performed on the automatic route generation apparatus 1 side (for example, by a main control unit 14a).

The watercraft 100 further includes a database 3. The database 3 stores various types of information. The various types of information include route information on the sea (including way points, which will be described below), nautical chart information, weather information, and the like. The database 3 is configured by a server computer that includes a storage device such as a hard disk, an optical disk, or a nonvolatile memory, but may be configured by a cloud server virtually existing on the Internet.

The watercraft 100 further includes a maneuvering unit 4 and an actuator 5. The maneuvering unit 4 is configured by a maneuvering lever such as a joystick. When the manual navigation mode is set as the operation mode of the automatic route generation apparatus 1, the user (for example, the watercraft operator) can maneuver the maneuvering unit 4 to operate the actuator 5.

The actuator 5 has a right actuator 5R and a left actuator 5L. The right actuator 5R is provided at a right stern of the watercraft 100. The left actuator 5L is provided at a left stern of the watercraft 100.

The right actuator 5R and the left actuator 5 L are included in a propulsion system in which an engine installed inboard and a drive unit installed outboard are directly connected to each other. Such a propulsion system is also referred to as a sterndrive (an inboard/outboard drive). Each of the right actuator 5R and the left actuator 5 L is provided with a rotation mechanism capable of moving the drive unit to change a propulsion direction. In the present embodiment, the two actuators 5 are provided on the right and left sides of the watercraft 100. However, the number of the actuators 5 is not particularly limited and may be one, three, or more.

### [3. Details of Automatic Route Generation Apparatus for Watercraft]

### (3-1. Basic Configuration)

The automatic route generation apparatus 1 includes an acquisition unit 11, a display unit 12, a storage unit 13, and a control unit 14.

The acquisition unit 11 includes a communication unit 11a and an input unit 11b. The communication unit 11a is an interface for communication with the outside. The communication may be made in the wired or wireless manner. Accordingly, the communication unit 11a may include a connector, to which a communication cable is connected, in preparation for the wired communication. In addition, the communication unit 11a may include an antenna, a transmission/reception unit, a modulation circuit, a demodulation circuit, and the like in preparation for the wireless communication.

In the present embodiment, the communication unit 11a is communicably connected to the sensor unit 2 and the database 3 described above. In this way, the information detected by the sensor unit 2 and the information recorded in the database 3 can be input to the automatic route generation apparatus 1 via the communication unit 11a.

The input unit 11b accepts a specification input (hereinafter, simply referred to as an input) by the user. Such an input unit 11b includes a touch panel, a mouse, or a keyboard, for example. When the input unit 11b includes the touch panel, the input unit 11b may be arranged on a front surface of the display unit 12 and integrated with the display unit 12. In the case where the automatic route generation apparatus 1 is mounted on the watercraft 100, the ship operator can be the user. In the case where the automatic route generation apparatus 1 is carried out from the watercraft 100, or in the case where the automatic route generation apparatus 1 is installed outside the watercraft 100, a maneuverer who maneuvers the automatic route generation apparatus 1 can be the user.

The display unit 12 is a display (monitor) that shows various types of information, and includes a liquid-crystal display device, for example.

The storage unit 13 is a memory that stores the various types of the information, and is configured by using a random access memory (RAM), a read only memory (ROM), a hard disk, an optical disk, a nonvolatile memory, or the like. The storage unit 13 includes a program storage unit 13a, a route storage unit 13b, and a temporary storage unit 13c. The program storage unit 13a stores an operating program of the control unit 14. The route storage unit 13b stores information that is generated by a generation unit 14b of the control unit 14. The information includes information on a newly generated route, information on a set navigation prohibition area, and the like. The temporary storage unit 13c temporarily stores the information acquired by the acquisition unit 11.

The control unit 14 includes a central arithmetic processing unit referred to as a central processing unit (CPU), for example. The control unit 14 includes the main control unit 14a, the generation unit 14b, a display control unit 14c, and a risk prediction unit 14d.

The main control unit 14a makes various types of recognition and determination on the basis of the information acquired by the acquisition unit 11, and further controls the actuators 5 (the right actuator 5R and the left actuator 5L). In addition, the main control unit 14a controls the input/output of the information to/from the storage unit 13. The generation unit 14b generates the route of the watercraft 100 on the basis of the information acquired by the acquisition unit 11, and the details thereon will be described below. The display control unit 14c controls display of the information on the display unit 12 on the basis of the input to the input unit 11b.

The risk prediction unit 14d predicts risk of a collision of the watercraft 100 with the obstacle on the basis of the detection result by the sensor unit 2. For example, the risk prediction unit 14d can predict the risk on the basis of detection information (obstacle information) that is output from the obstacle detection unit 30 (see FIG. 1) mounted on the watercraft 100 and is acquired by the acquisition unit 11. More specifically, the risk prediction unit 14d recognizes a location of the obstacle from the detection information and predicts the risk on the basis of a distance (time-to-collision when the speed is set to an appropriate value) from the closest location to the obstacle on the route to the obstacle. By this method, it is possible to predict the risk such that the risk is increased as the distance is reduced and that the risk is reduced as the distance is increased.

### (3-2. Display Layout of Display Unit)

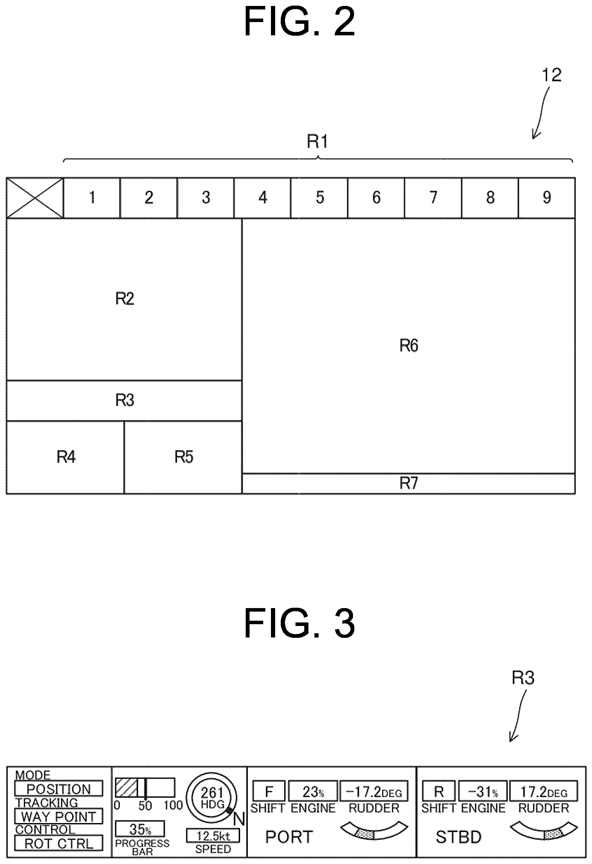

FIG. 2 is an explanatory view illustrating display areas for the various types of the information in the display unit 12. The display unit 12 includes, as the display areas for the various types of the information, a camera image display area R1, a representative image display area R2, a first state display area R3, a control panel display area R4, a second state display area R5, a route display area R6, and a risk prediction display area R7.

In the present embodiment, it is assumed that the touch panel as the input unit 11b is arranged on the front surface of the display unit 12 and the user can perform an instruction input by touching (pressing) each of the display areas. Then, based on the instruction input, the display control unit 14c controls the display on the display unit 12. In the following description, although the display control unit 14c is not particularly described, a main component that controls the display unit 12 is the display control unit 14c. Arrangement and a size of each of the display areas described below are merely one example and thus are not limited to the example below.

The camera image display area R1 is located at a header in an upper portion of a display screen of the display unit 12. In the camera image display area R1, the captured image that is acquired by the telescopic camera 22 (see FIG. 1) is displayed. In the present embodiment, since the telescopic camera 22 is configured by the multi-camera array having the nine cameras, a total of the nine captured images, each of which is captured by the respective camera, are displayed side by side in the camera image display area R1.

The user can select a desired captured image by touching the display area of any of the nine captured images. The selected captured image is enlarged and displayed in the representative image display area R2.
The representative image display area R2 is located on a lower left side of the camera image display area R1 on the screen. In the representative image display area R2, the displayed image can be zoomed out or zoomed in by pinch-in or pinch-out. The term "pinch-in" means action of moving two fingers in a manner to pinch the image with the two fingers on the touch panel. On the contrary, the term "pinch-out" means action of spreading the two fingers on the touch panel.

Instead of pinch-in/pinch-out, zoom-out/zoom-in buttons may be displayed separately, and the display image may be zoomed out or zoomed in by touching the zoom-out/zoom-in buttons, respectively. In addition, after zoom-out or zoom-in, the original image before zoom-out or zoom-in may be displayed by double-tapping an arbitrary part of the representative image display area R2. The zoomed-in image may be scrolled by a drag maneuver in which the finger touching the screen is slid along the screen.

The first state display area R3 is located under the representative image display area R2 on the screen. In the first state display area R3, information on a steering system of the watercraft 100 is displayed. FIG. 3 illustrates an example of the information that is displayed in the first state display area R3. In the first state display area R3, for example, a system setting state (a setting state of each of a mode, tracking, and control), a progress rate, a course, the speed, a state on a port side, and a state on a starboard side are displayed.

The progress rate is a progress rate of the navigation with respect to the entire route during the automatic navigation. In the example illustrated in FIG. 3, the progress rate is displayed by both a bar and a numerical value. However, the progress rate only needs to be displayed by at least one of the bar and the numerical value. The course is indicated by the azimuth angle of 0° to 360°, where a direction indicating "north" is 0°. A numerical value that indicates the azimuth is displayed in a circular gauge. A mark N indicating "north" is also displayed in the circular gauge. A display position of the mark N is changed on the circular gauge such that a top portion of the circular gauge always indicates the azimuth during travel (forward in a travel direction).

The speed is displayed in units of 0.5 knot (kt), for example. As the states of the port side and the starboard side, a shift state (any of forward (F)/reverse (R)/neutral (N)), engine output, a numerical value (-45.0° to 45.0°) indicating a steering angle of a rudder, and a bar are displayed.

The control panel display area R4 is located on a lower left side of the first state display area R3 on the screen.

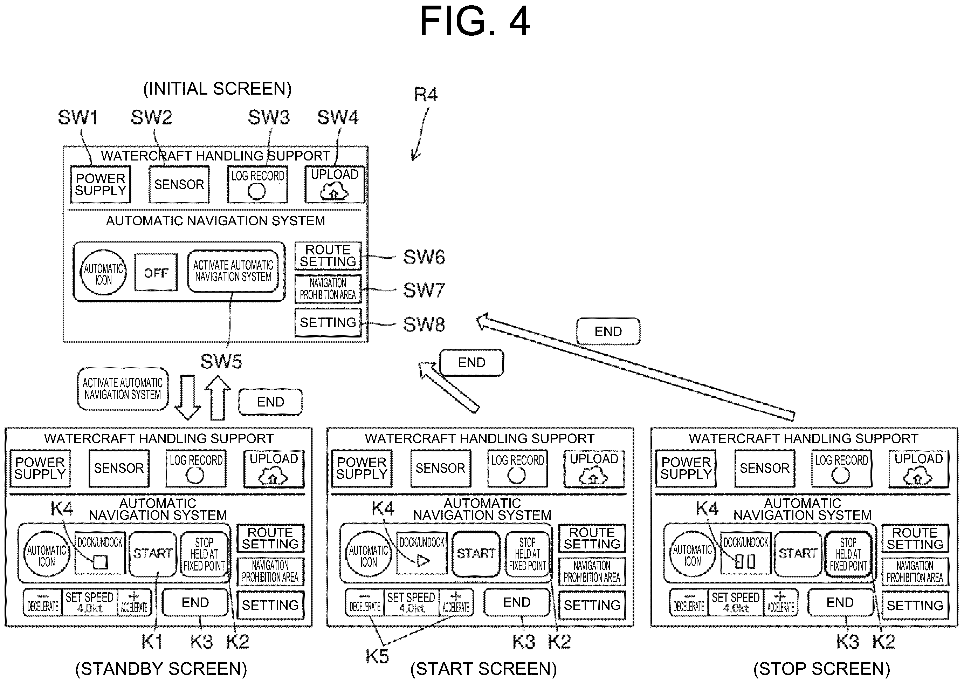

FIG. 4 illustrates an example of transition of information that is displayed in the control panel display area R4.
In the control panel display area R4, as an initial screen, various switches (touch areas) associated with watercraft handling support and the automatic navigation system are displayed. Examples of the switches associated with the watercraft handling support include a power supply switch SW1 for turning ON/OFF a power supply, a sensor switch SW2 for switching ON/OFF of detection by the sensor unit 2, a log switch SW3 for switching ON/OFF of log recording, and an upload switch SW4 for switching ON/OFF of system uploading.

Examples of the switches associated with the automatic navigation system are an automatic navigation system activation switch SW5, a route setting switch SW6, a navigation prohibition area setting switch SW7, and a setting switch SW8.

When the user touches the automatic navigation system activation switch SW5, the display screen of the control panel display area R4 is shifted to a standby screen illustrated in a lower left portion of FIG. 4. When a start key K1 is touched on the standby screen, navigation by the automatic navigation system (navigation in an automatic berthing/unberthing mode in FIG. 4) is started. The display screen (a start screen) of the control panel display area R4 at this time is illustrated in a lower center portion of FIG. 4. Thereafter, when a stop key K2 is touched, the navigation by the automatic navigation system is stopped. The display screen (a stop screen) of the control panel display area R4 at this time is illustrated in a lower right portion of FIG. 4. When an end key K3 is touched on any of the three lower screens in FIG. 4, that is, the standby screen, the start screen, and the stop screen, the display screen of the control panel display area R4 returns to the initial screen in an upper portion of FIG. 4.

By touching a mode selection key K4 on any of the standby screen, the start screen, and the stop screen, a berthing/unberthing mode for automatic berthing/unberthing of the watercraft and an offshore navigation mode for automatic offshore navigation can alternatively selected as the automatic navigation mode. In addition, by touching a speed setting key K5 (acceleration or deceleration), the speed in the berthing/unberthing mode or the offshore navigation mode can be set.

When the route setting switch SW6 or the navigation prohibition area setting switch SW7 is touched on the display screen of the control panel display area R4, a navigation setting menu (an automatic navigation home menu, which will be described below) or a navigation prohibition area setting menu is displayed on a part of the display unit 12, and details thereon will be described below. When the setting switch SW8 is touched, the display screen is shifted to another system setting screen, and various settings can be made.

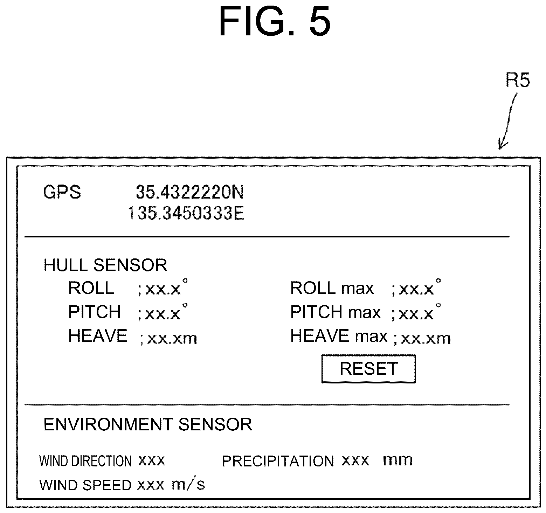

The second state display area R5 is located on a lower right side of the first state display area R3 and a right side of the control panel display area R4 on the screen. FIG. 5 illustrates an example of information that is displayed in the second state display area R5. In the second state display area R5, information such as current location information (the latitude and the longitude) of the watercraft 100, a current roll angle (an instantaneous value/a maximum value), a current pitch angle (an instantaneous value/a maximum value), a heave (an instantaneous value/a maximum value), the wind direction, the wind speed, and the quantity of precipitation is displayed on the basis of the detection result by the sensor unit 2.

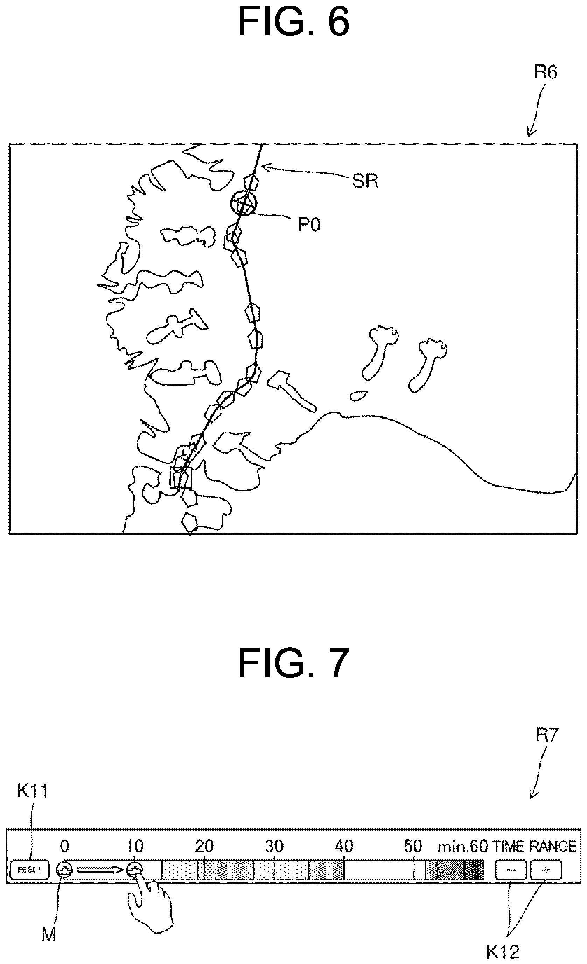

The route display area R6 is located on a lower right side of the camera image display area R1 and a right side of the representative image display area R2, the first state display area R3, and the second state display area R5 on the screen. FIG. 6 illustrates an example of information that is displayed in the route display area R6. In the route display area R6, a route SR of the watercraft 100 is displayed in a manner to be superimposed on the nautical chart.

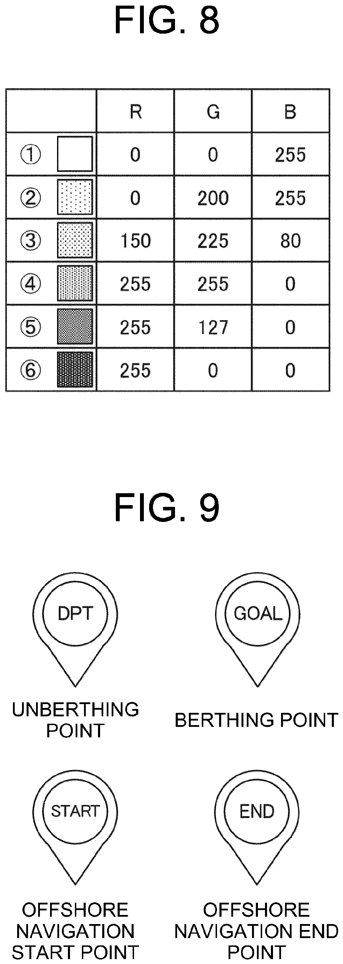

The risk prediction display area R7 is located on a lower side of the route display area R6 on the screen. FIG. 7 illustrates an example of information that is displayed in the risk prediction display area R7. In the risk prediction display area R7, a degree of the risk predicted by the risk prediction unit 14d is displayed by a time-series bar (a progress bar). The degree of the risk is indicated in 6 levels from 1 as the lowest degree of the risk to 6 as the highest degree of the risk, and is displayed in different colors according to definitions in FIG. 8. Each of numerical values of RGB in FIG. 8 represents respective color of red, green, and blue by 8 bits (0 to 255). In the risk prediction display area R7, time at the current location of the watercraft 100 is set as a reference (0 minute), and the risk that corresponds to each time from the time at the current location to time at a predicted location is displayed by color.

In the risk prediction display area R7, a marker M that indicates the location of the watercraft 100 can be dragged to a future location. In this case, a location to which the marker M is dragged is highlighted in the route display area R6. For example, as illustrated in FIG. 7, when the marker M is dragged from the location at the current time (the origin of the time-series bar) to the location after 10 minutes, in FIG. 6, a range from the location at the current time to a location P0 after 10 minutes is highlighted.

When a reset key R11 is touched in the risk prediction display area K7, the marker M is returned to the location at the current time. When the system is activated, the marker M is placed at the location at the current time. In addition, by touching a prediction time adjustment key K12 in the risk prediction display area R7, a maximum prediction time can be increased or reduced and set in increments of 30 minutes between 30 minutes and 3 hours.

### [4. Automatic Route Generation Method]

### (4-1. Basic Rules)

First, a description will be made on basic rules of the automatic navigation display in the route display area R6. The route means a line that connects a departure pier and an arrival pier through the way points as via-points. A straight line between two each of the way points is referred to as a way line that means an intermediate route. Hereinafter, the way point will also be described as WP, and the way line will also be described as WL.

Two modes of the offshore navigation mode and the berthing/unberthing mode are available for the automatic navigation. In the offshore navigation mode, the watercraft 100 is automatically navigated in the offshore section. In the berthing/unberthing mode, the watercraft 100 is automatically navigated in the unberthing section and the berthed section.

FIG. 9 illustrates examples of display tags in the offshore navigation mode and the berthing/unberthing mode. A start point (START) tag that indicates a start point location is displayed at a start point of the offshore navigation mode, and an end point (END) tag that indicates an end point location is displayed at an end point thereof. An unberthing point (DPT (DEPARTURE)) tag that indicates the unberthing location is displayed at a start point of the berthing/unberthing mode, and a berthed point (GOAL) tag that indicates the berthing location is displayed at an end point thereof. The current location of the own watercraft is displayed in white, for example, but may be displayed in a color other than white.

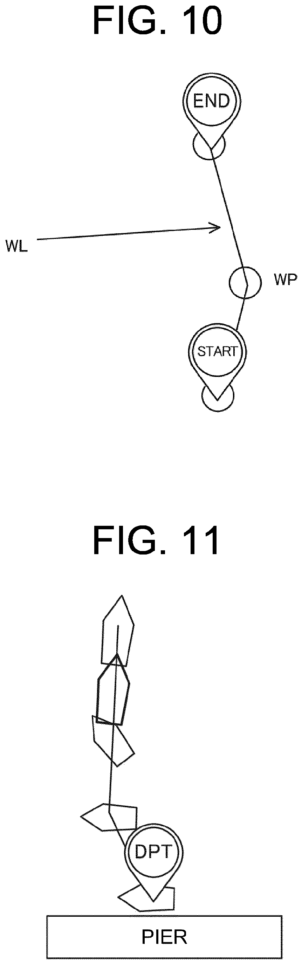

FIG. 10 is an explanatory view schematically illustrating an example of the route in the offshore navigation mode. FIG. 11 is an explanatory view schematically illustrating the route in the berthing/unberthing mode. In the route display area R6 (a MAP view), a scheduled route in the offshore navigation mode is displayed in any suited color (for example, yellow), and a scheduled route in the berthing/unberthing mode is displayed in another color (for example, orange). However, the above scheduled routes may be displayed in the same color.

In the offshore navigation mode, the watercraft 100 is automatically navigated at a preset speed in a manner to connect the WPs, which are specified by the user, on an offshore route. As illustrated in FIG. 10, each of the WPs in the offshore navigation mode is displayed as a circle icon.

In the berthing/unberthing mode, the watercraft 100 is automatically navigated at a preset speed in a manner to connect the WPs, which are set by the user, in a harbor. In the berthing/unberthing mode, the user can specify a bow azimuth of the watercraft 100 at each of the WPs by maneuvering the input unit 11b (details thereon will be described below). Each of the WPs in the berthing/unberthing mode is displayed as a ship-shaped icon for acknowledgement of the bow azimuth.

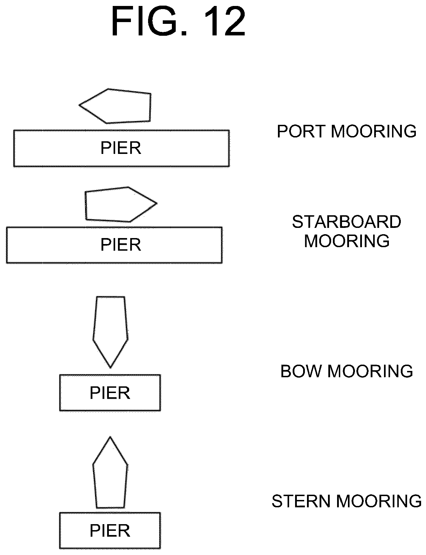

FIG. 12 is an explanatory view schematically illustrating moored states of the watercraft 100 along the pier. There are four types of moored states: port mooring, starboard mooring, bow mooring, and stern mooring. In the berthing/unberthing mode, each of the WPs and the berthing/unberthing location is displayed by any of the ship-shaped icons illustrated in FIG. 12. Accordingly, the user can easily recognize the bow azimuth of the watercraft 100 at each of the WPs and the berthing/unberthing location on the display unit 12 (the route display area R6).

### (4-2. Route Setting)

When the route setting switch SW6 is touched in the control panel display area R4, which is illustrated in FIG. 2 and FIG. 4, the display of the risk prediction display area R7 is replaced with the display of the automatic navigation home menu.

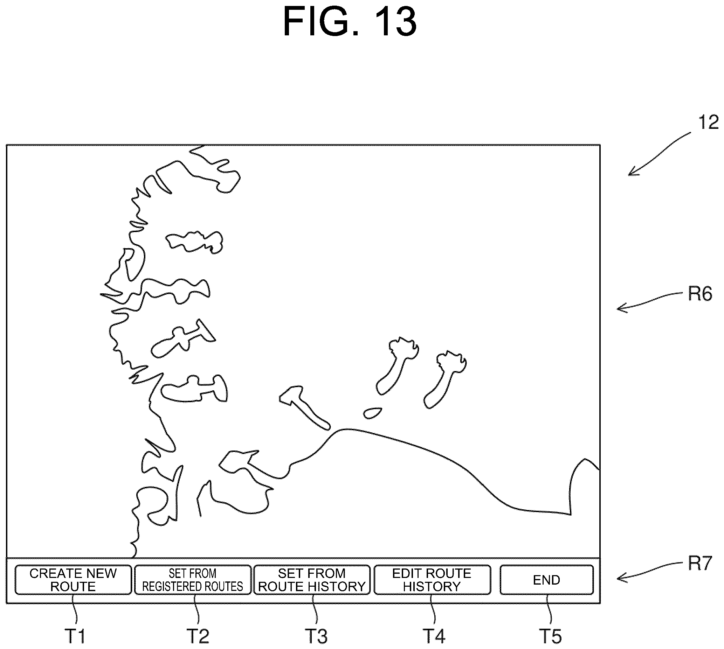

FIG. 13 is an explanatory view illustrating an example of the automatic navigation home menu that is displayed in the risk prediction display area R7. The automatic navigation home menu includes a new route creation tab T1, a registered route selection tab T2, a route history selection tab T3, a route history editing tab T4, and an end tab T5. When the end tab T5 is touched, the risk prediction display area R7 returns to the display of the risk illustrated in FIG. 7.

When the new route creation tab T1 is touched, a new route for the automatic navigation can be created and registered. When the registered route selection tab T2 is touched, the route to be used (set) can be selected and set from the registered routes (up to five). When the route history selection tab T3 is touched, route history of all the routes that have been created so far is displayed, and the route to be used can be selected and set from the displayed route history. When the route history editing tab T4 is touched, the route history can be edited.

Hereinafter, a detailed description will be made on the route setting by touching each of the tabs. In the drawings described below, the DPT tag, the START tag, the END tag, and the GOAL tag on the screen may respectively be denoted only by capital letters "D", "S", "E", and "G" for convenience.

### «4-2-1. Creation of New Route»

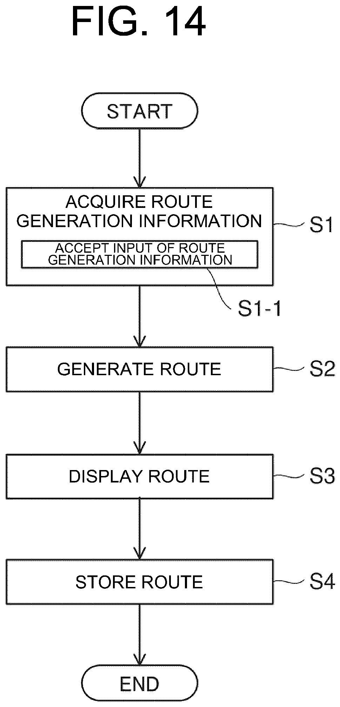

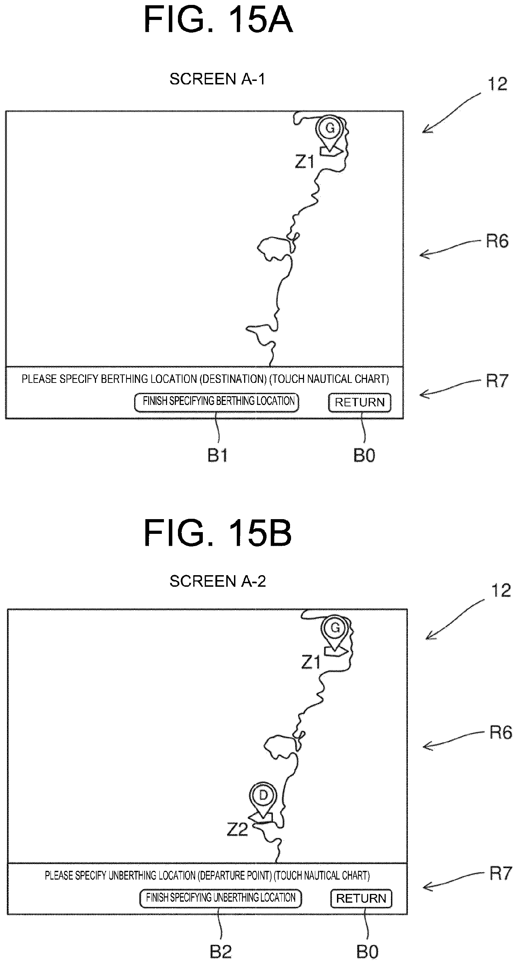

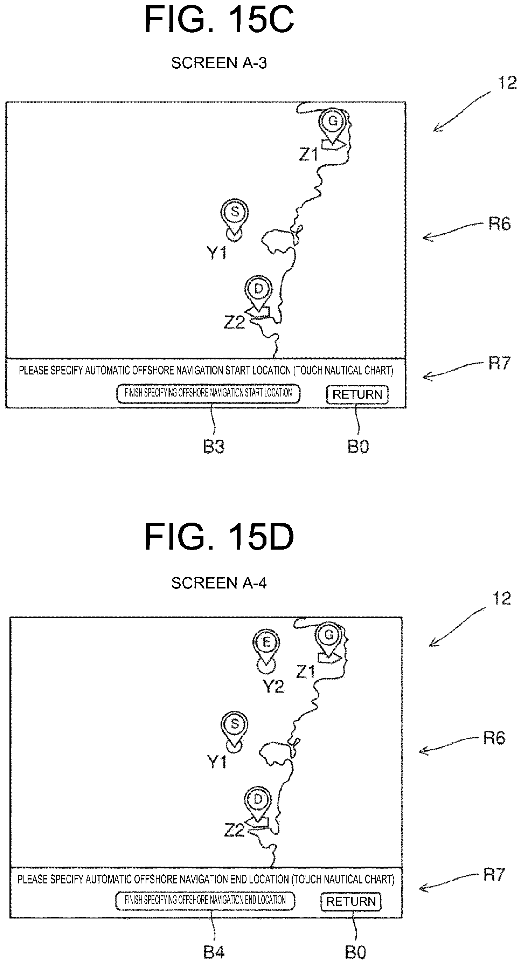

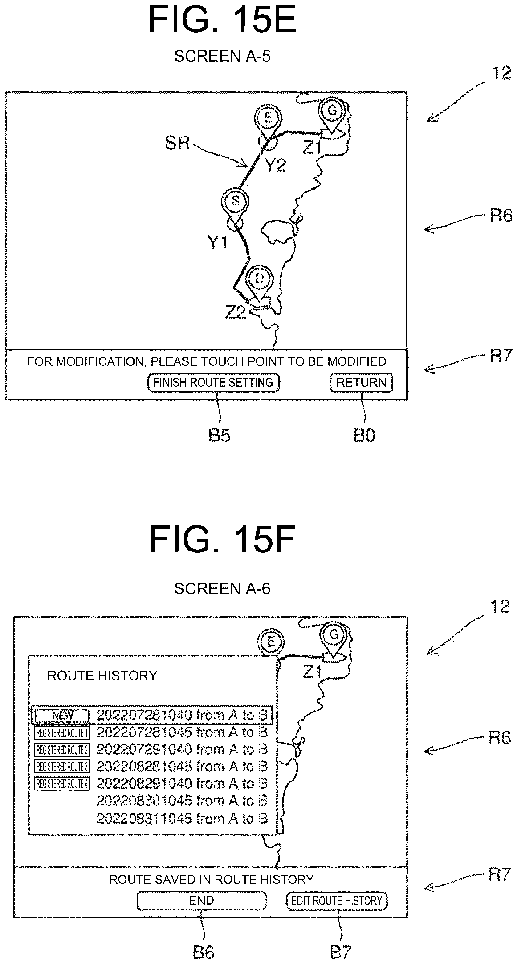

FIG. 14 is a flowchart illustrating a flow of creating the new route. When the user touches the new route creation tab T1, a screen A-1 illustrated in FIG. 15 is displayed in the route display area R6 and the risk prediction display area R7.

### (S1; Acquisition Step)

On the screen A-1, the nautical chart is displayed, and a message that prompts the user to specify the berthing location is also displayed. When the user touches a predetermined location on the displayed nautical chart, the GOAL tag that indicates the berthing location is displayed at the touched location. A ship-shaped icon Z1 that indicates the bow azimuth is also displayed at the berthing location. When a berthing location specification end button B1 is touched, as illustrated in a screen A-2 of FIG. 15B, a message that prompts the user to specify the unberthing location is displayed.

On the screen A-2, when the user touches a predetermined location on the displayed nautical chart, the DPT tag that indicates the unberthing location is displayed at the touched location. A ship-shaped icon Z2 that indicates the bow azimuth is also displayed at the unberthing location. When an unberthing location specification end button B2 is touched, as illustrated in a screen A-3 of FIG. 15C, a message that prompts the user to specify the offshore navigation start location is displayed.

On the screen A-3, when the user touches a predetermined location on the displayed nautical chart, the START tag that indicates the offshore navigation start location is displayed at the touched location. A circle icon Y1 that indicates the WP is also displayed at the start location. When a start location specification end button B3 is touched, as illustrated in a screen A-4 of FIG. 15D, a message that prompts the user to specify an offshore navigation end location is displayed.

On the screen A-4, when the user touches a predetermined location on the displayed nautical chart, the END tag that indicates the offshore navigation end location is displayed at the touched location. A circle icon Y2 that indicates the WP is also displayed at the end location.

As it has been described so far, when the user touches the predetermined locations on the screen, that is, presses the predetermined locations on the touch panel as the input unit 11b, the inputs of the berthing/unberthing locations, the offshore navigation start location, and the offshore navigation end location are accepted, and route generation information including the four locations is acquired. Thus, it can be said that the step that has been described so far corresponds to an acquisition step (S1) in which the acquisition unit 11 acquires the route generation information including the berthing location, the unberthing location, the offshore navigation start location, and the offshore navigation end location of the watercraft 100. It can also be said that the acquisition step includes an acceptance step (S1-1) in which the input unit 11b as the acquisition unit 11 accepts the inputs by the user.

### (S2; Route Generation Step)

In a route generation step S2, the generation unit 14b generates the route SR of the watercraft 100 on the basis of the route generation information that has been acquired by the acquisition unit 11 in the acquisition step S1. More specifically, when the user touches an end location specification end button B4 on the screen A-4 in FIG. 15D, the generation unit 14b sequentially connects the DPT tag, the START tag, the END tag, and the GOAL tag to generate the route SR.

### (S3; Route Display Step)

As illustrated in a screen A-5 of FIG. 15E, the route SR, which has been generated in S2, is displayed as a seamless route from unberthing to berthing. On the screen A-5, the user can modify the route SR by touching any location on the route SR. However, details thereon will be described below.

### (S4; Route Storing Step)

On the screen A-5, when the user touches a route setting end button B5, information on the set route SR is stored as the route history in the route storage unit 13b. At this time, as illustrated in a screen A-6 of FIG. 15F, a list of the route history stored in the route storage unit 13b is displayed on the screen, and the route SR displayed in S3 is displayed on the top, which indicates that the route SR is the latest route (NEW).

On the screen A-6, when the user touches an end button B6, the flow of creating the new route is terminated, and the display screen returns to the automatic navigation home menu illustrated in FIG. 13. Meanwhile, on the screen A-6, when a route history editing button B7 is touched, a mode is shifted to a route history editing mode, which will be described below.

When a return button B0 is touched on any of the screens A-1 to A-5, the display screen returns to the previous screen. For example, when the return button B0 is touched on the screen A-5, the display screen returns to the screen A-4.

As it has been described so far, the automatic route generation apparatus 1 in the present embodiment includes the acquisition unit 11 and the generation unit 14b. The route generation information that is acquired by the acquisition unit 11 includes the four points (the berthing location, the unberthing location, the offshore navigation start location, and the offshore navigation end location). Thus, as illustrated in FIG. 15E, the generation unit 14b can generate the seamless (consecutive) route SR from unberthing of the watercraft 100 to berthing thereof via the offshore navigation (the navigating on the sea) on the basis of the route generation information.

From a perspective of allowing the user to specify all of the four points, it is desirable that, as in the present embodiment, the acquisition unit 11 includes the input unit 11b and that the input unit 11b is configured to accept the inputs of the berthing location, the unberthing location, the offshore navigation start location, and the offshore navigation end location. This configuration is significantly effective particularly when the route is generated off-line, that is, the route is generated by the automatic route generation apparatus 1 on the outside of the watercraft 100. In addition, from a perspective of allowing the user to input the four points intuitively and speedy, it is desirable that the input unit 11b is configured by the touch panel.

Here, in the case where the automatic route generation apparatus 1 is mounted on the watercraft 100, it can be considered that the unberthing location is the same as the current location of the watercraft 100. Accordingly, the location that is detected by the sensor unit 2 (particularly, the GNSS device 25) may automatically be set as the unberthing location. In this case, it is no longer necessary to input the unberthing location by using the input unit 11b, which improves the user's convenience.

In the route creation, the route is not determined until the departure point and the arrival point of the navigation are determined. Thus, the unberthing location as the departure point of the navigation and the berthing location as the arrival point of the navigation are important points (locations) for the route creation. In particular, since the berthing location is the destination of the navigation, the berthing location is extremely important. From the above, it is desirable that the user inputs the four points in a descending order of importance and that the generation unit 14b generates the route SR on the basis of the inputs in this order. That is, the generation unit 14b desirably generates the route SR on the basis of the inputs of the berthing location, the unberthing location, the offshore navigation start location, and the offshore navigation end location in this order by using the input unit 11b.

In addition, it is desirable that the user can easily recognize the consistent route SR, which includes berthing/unberthing and the offshore navigation, by looking at the display screen of the display unit 12. In this respect, the display control unit 14c desirably displays the route SR, which is generated by the generation unit 14b, on the display unit 12.

As illustrated in FIGS. 15A to 15F, the attitudes of the watercraft 100 during berthing and unberthing are indicated by the ship-shaped icons Z1, Z2, respectively. Thus, the user can easily recognize the attitudes of the watercraft 100 during berthing and unberthing by looking at the display unit 12. In this respect, the display control unit 14c desirably displays, on the display unit 12, the attitudes of the watercraft 100 on the route SR by the icons, in addition to the route SR.

### <<4-2-2. Route Setting from Registered Routes>>

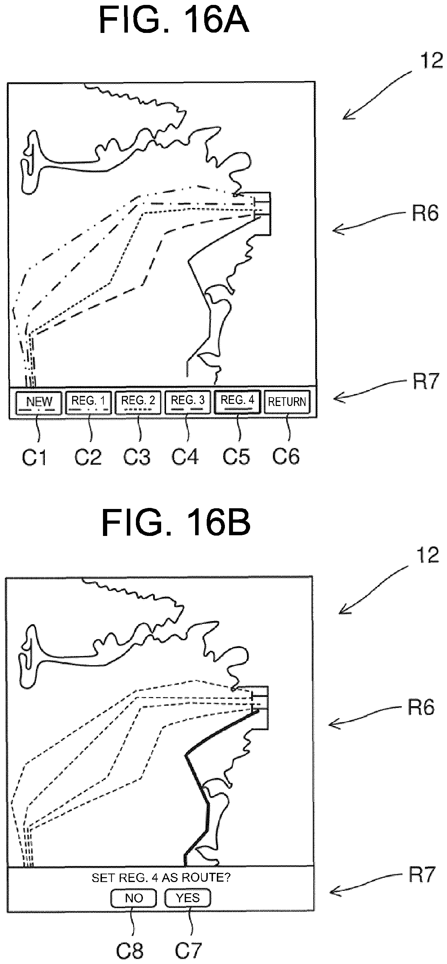

When the user touches the registered route selection tab T2 in the automatic navigation home menu of FIG. 13, as illustrated in FIG. 16A, the registered routes, that is, the routes that are stored in the route storage unit 13b and retrieved from the route storage unit 13b are displayed in the route display area R6. The five routes described above include the latest route (NEW), which is acquired by creating the new route, and pre-registered routes (four of registered routes 1 to 4 at a maximum). When the five routes are displayed, the various tags (tags of START, END, DPT, GOAL) are not displayed.

Meanwhile, selection tabs C1 to C5 for the five routes, which are displayed in the route display area R6, and a return tab C6 are displayed in the risk prediction display area R7. The selection tabs C1 to C5 correspond to the latest route (NEW) and the registered routes 1 to 4, respectively. When the return tab C6 is touched, the display screen returns to the automatic navigation home menu in FIG. 13.

When the user touches and selects any of the selection tabs D1 to D5, as illustrated in FIG. 16B, the selected route is displayed by a bold line, and the other routes are each displayed by a broken line or in a gray color. FIG. 16B illustrates the route in a case where the registered route 4 is selected in FIG. 16A. When the user touches a "YES" button C7, the registered route 4 is set as the route SR for the automatic navigation. When the user touches a "NO" button C8, the display screen returns to the automatic navigation home menu in FIG. 13.

### «4-2-3. Route Setting from Route History»

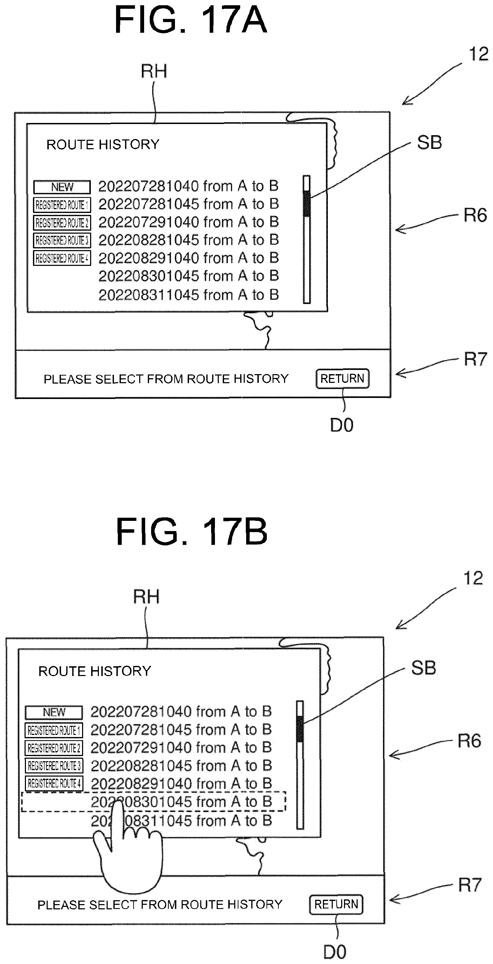

When the user touches the route history selection tab T3 in the automatic navigation home menu of FIG. 13, as illustrated in FIG. 17A, route history RH is displayed in the route display area R6. The routes that are included in the route history RH are the routes stored in the route storage unit 13b (see FIG. 1).

More specifically, the routes that are included in the route history RH are the latest route (NEW), which is acquired by creating the new route, the pre-registered routes (four of the registered routes 1 to 4 at the maximum), and routes other than those (routes that have been set and used in the past). Each of the routes is displayed as the route history RH in a state of being added with information such as a set date, the departure point (the unberthing location), and the arrival point (the berthing location).

The user can refer to all the routes included in the route history RH by vertically moving a scroll bar SB, which is displayed on a right side of the route history RH, while pressing the scroll bar SB with a finger.

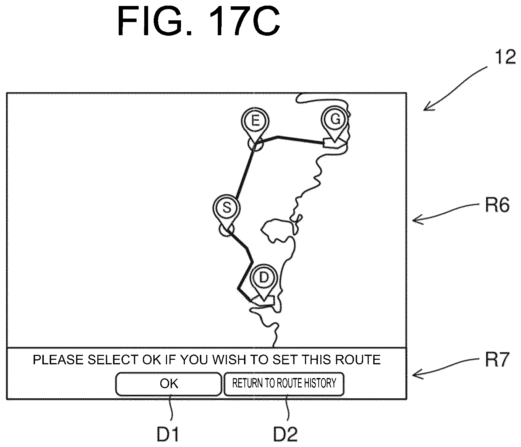

As illustrated in FIG. 17B, when the user touches and selects a predetermined route from the displayed route history RH, the selected route is displayed in the route display area R6 as illustrated in FIG. 17C. Then, when the user touches an "OK" button D1 that is displayed in the risk prediction display area R7, the displayed route is set as the route SR for the automatic navigation.

When the user touches a "RETURN" button D0 that is displayed in the risk prediction display area 17B on one or both of the screens illustrated in FIG. 17A and FIG. 17B, the display screen returns to the automatic navigation home menu in FIG. 13. When the user touches a "BACK TO ROUTE HISTORY" button D2 on the screen illustrated in FIG. 17C, the display screen returns to that in FIG. 17A.

In the present embodiment, the routes SR that are generated by the generation unit 14b are stored in the route storage unit 13b. Accordingly, as in the present embodiment, such route setting is enabled that the history of the routes SR (the route history RH) is displayed on the display unit 12 and the user selects the route SR. In this respect, the display control unit 14c desirably displays the route history screen (route history RH), which shows the history of the routes SR stored in the route storage unit 13b, on the display unit 12 in response to the input to the input unit 11b.

### <<4-2-4. Route History Editing>>

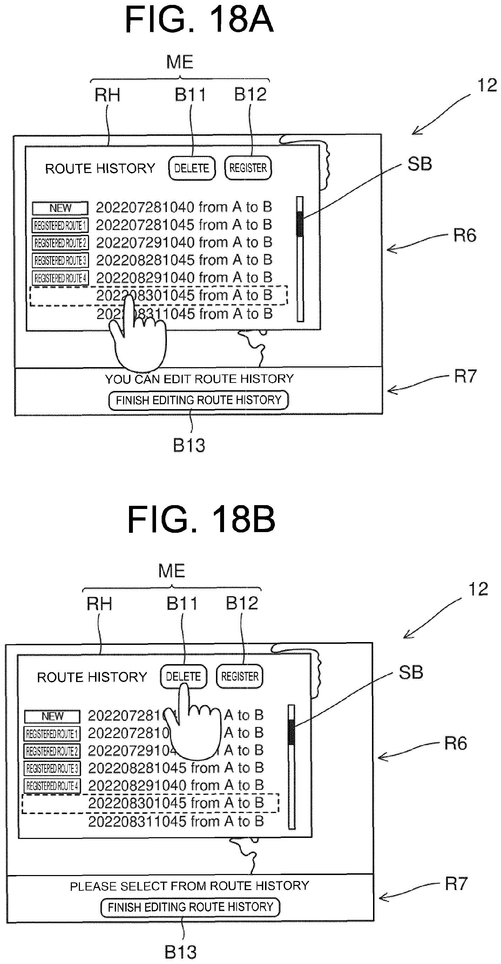

When the user touches the route history editing tab T4 in the automatic navigation home menu of FIG. 13, as illustrated in FIG. 18A, a route history editing menu ME is displayed in the route display area R6. The route history editing menu ME is configured by adding a delete button B11 and a register button B12 to the route history RH illustrated in FIG. 17A.

On a screen illustrated in FIG. 18A, the user touches and selects the route to be deleted. Then, as illustrated in FIG. 18B, when the user touches the delete button 18B, the selected route is deleted from the list of the route history RH.

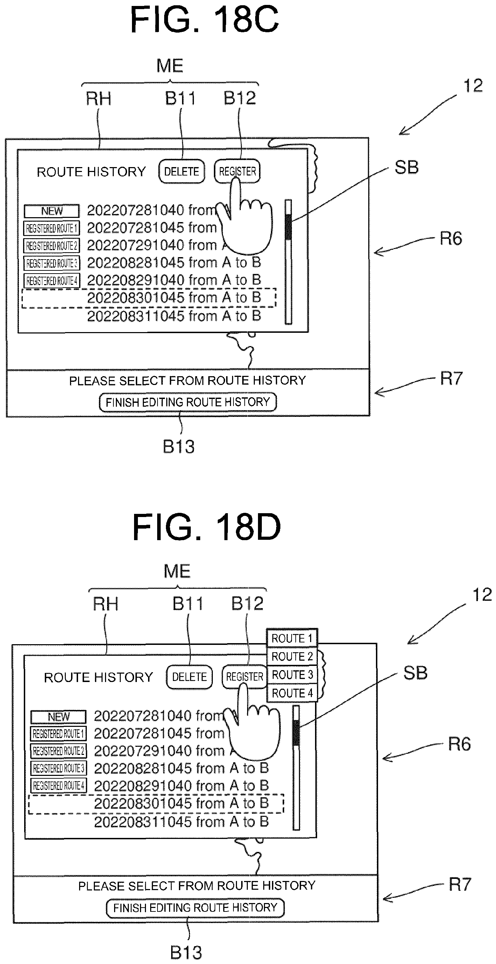

Meanwhile, on the screen illustrated in FIG. 18A, the user touches and selects the route to be registered as "favorite". Then, as illustrated in FIG. 18C, when the user touches the register button B12, a pop-up menu is displayed as illustrated in FIG. 18D, and the user can select which of the routes 1 to 4 the route is to be registered. For example, when the user touches the route 1, the selected route is registered as the registered route 1 (stored in the route storage unit 13b).

In all of the screens in FIG. 18A to FIG. 18D, a "FINISH EDITING ROUTE HISTORY" button B13 is displayed on the risk prediction display area R7. When the user touches the "FINISH EDITING ROUTE HISTORY" button B13, the display screen returns to the automatic navigation home menu in FIG. 13.

In the case where the frequently used route SR is stored as the registered route in the route storage unit 13b, the registered route selection screen is displayed from the next time (see FIG. 16A and FIG. 16B). In this way, the user can quickly select the registered route. In this respect, as in the present embodiment, the route storage unit 13b desirably stores, as the registered route, the predetermined route, registration of which is selected by using the input unit 11b, among the plural routes displayed as the history on the route history screen (the display screen of the route history RH).

### <<4-2-5. Route Modification>>

As described above, on the screen A-5 in FIG. 15E, when the user touches the location on the route SR, the route is modified. Hereinafter, details of the route modification will be described.

### (Modification of Berthing/Unberthing Locations)

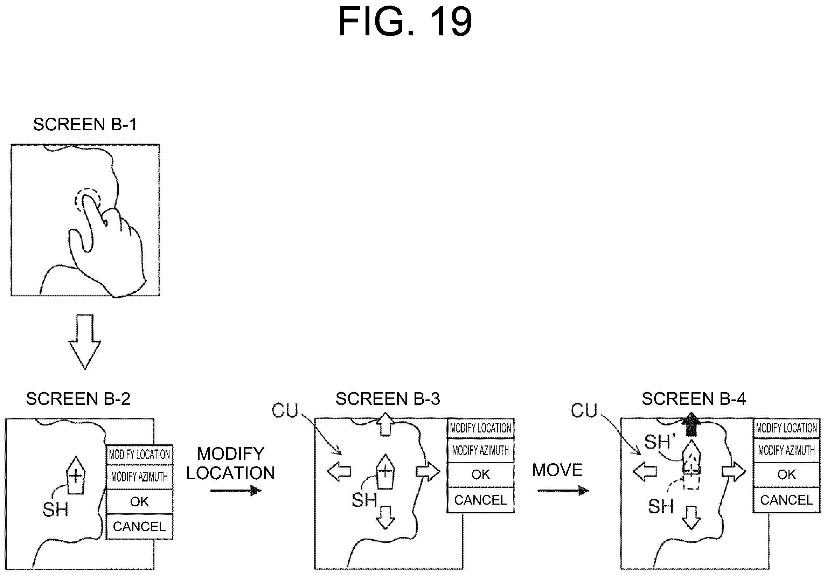

FIG. 19 illustrates transition of the display screen by the user's maneuver (touching) of the input unit 11b at the time when the berthing/unberthing location is modified. In FIG. 19, a part of the screen A-5 in FIG. 15E is illustrated as screens B-1 to B-4.

First, as illustrated in the screen B-1 of FIG. 19, when the user touches and specifies the unberthing location or the berthing location, a pop-up menu is displayed near the specified location (the display location of the ship-shaped icon SH) as illustrated in the screen B-2.

When the user touches and selects "MODIFY LOCATION" in the pop-up menu, a cross cursor CU appears on the screen as illustrated in the screen B-3. The cross cursor CU includes an upward movement key, a downward movement key, a rightward movement key, and a leftward movement key. The upward movement key, the downward movement key, the rightward movement key, and the leftward movement key are displayed on an upper side, a lower side, a right side, and a left side of the ship-shaped icon SH, respectively. When the user touches any of the keys of the cross cursor CU, the location of the ship-shaped icon SH is moved in a direction corresponding to the touched key (any of the upward, downward, rightward, and leftward directions) and modified.

For example, when the user touches the upward movement key of the cross cursor CU on the screen B-3, the ship-shaped icon SH moves upward by a distance that corresponds to the number of touches or a touch time. At this time, the ship-shaped icon SH before the location modification is displayed in a light color, and a ship-shaped icon SH' after the location modification is displayed in a dark color and superimposed on the ship-shaped icon SH before the location modification. On the screen B-4, the ship-shaped icon SH before the location modification is indicated by a broken line, and the ship-shaped icon SH' after the location modification is indicated by a solid line.

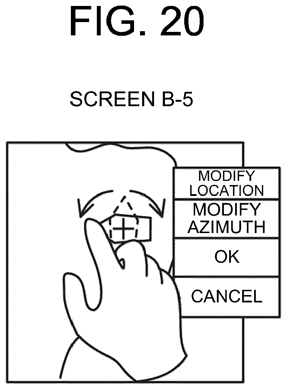

In addition, when the user touches and selects "MODIFY AZIMUTH" in the pop-up menu on any of the screens B-2 to B-4, as in a screen B-5 of FIG. 20, the user can rotate the bow azimuth in the left direction by moving the finger counterclockwise while touching the bow of the ship-shaped icon. Although not illustrated, the user can rotate the bow azimuth in the right direction by moving the finger clockwise while touching the bow of the ship-shaped icon. Similar to FIG. 19, the ship-shaped icon before the azimuth modification is displayed in the light color, and the ship-shaped icon after the azimuth modification is displayed in the dark color and superimposed on the ship-shaped icon before the azimuth modification. Also, on the screen B-5, the ship-shaped icon before the azimuth modification is indicated by a broken line, and the ship-shaped icon after the azimuth modification is indicated by a solid line.

In the pop-up menu on any of the screens B-1 to B-5, when the user touches and selects "OK", the modified content is reflected onto the screen A-5 in FIG. 15E, and modification processing is terminated.

Meanwhile, in the pop-up menu on any of the screens B-1 to B-5, when the user touches and selects "CANCEL", the display screen returns to the screen in the previous step. For example, when the user modifies the azimuth on the screen B-4 and then touches and selects "CANCEL" on the same screen, the display screen returns to the screen B-2 before the azimuth modification. When the user touches and selects "CANCEL" on the screen B-2, the display screen returns to the screen B-1, that is, the state on the screen A-5 in FIG. 15.

When the new icon (the ship-shaped icon SH') after the modification is displayed relatively darker than the old icon (the ship-shaped icon SH) before the modification, the user can easily recognize the new icon after the modification and can easily acknowledge an order of the modification. In this respect, when accepting an instruction input to modify the attitude of the watercraft 100 by using the input unit 11b, the display control unit 14c desirably displays, on the display unit 12, the old icon, which indicates the attitude before the modification and is superimposed on the new icon indicating the attitude after the modification, in the lighter color than the new icon. Such control is particularly effective when the display control unit 14c displays the new icon and the old icon in the superimposed manner on the display unit 12.

### (Modification of Offshore Navigation Start Location and End Location)

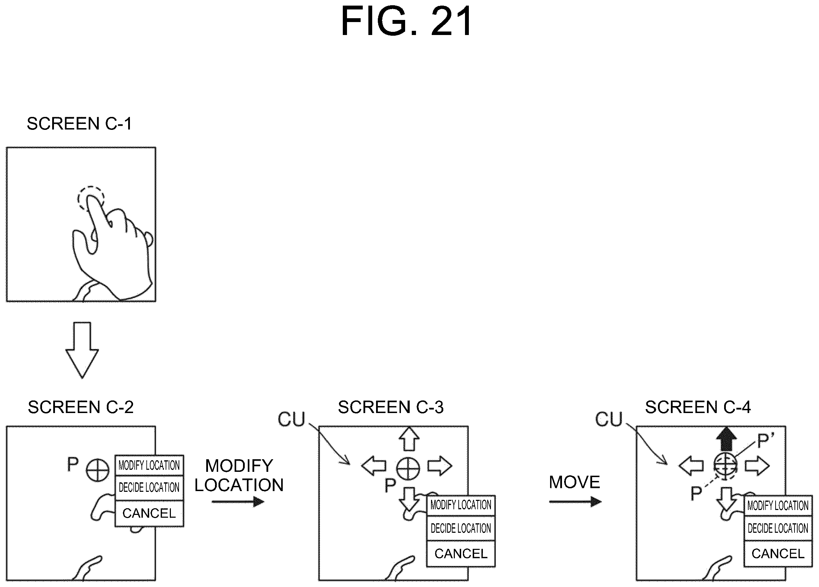

FIG. 21 illustrates transition of the display screen by the user's maneuver (touching) of the input unit 11b at the time when the offshore navigation start location and the offshore navigation end location are modified. In FIG. 21, a part of the screen A-5 in FIG. 15E is illustrated as screens C-1 to C-4.

First, as illustrated in the screen C-1 of FIG. 21, when the user touches and specifies the offshore navigation start location or end location, a mark P is displayed at the specified location, and a pop-up menu is displayed near the mark P as illustrated in the screen C-2.

When the user touches and selects "MODIFY LOCATION" in the pop-up menu, as illustrated in the screen C-3, the cross cursor CU appears around the mark P on the screen. When the user touches any of the keys of the cross cursor CU, the location of the mark P is moved in a direction corresponding to the touched key and modified.

In the pop-up menu, when the user touches and selects "DECIDE LOCATION", the location after the modification is set as the offshore navigation start location or end location and reflected onto the screen A-5 in FIG. 15E, and the modification processing is terminated.

Meanwhile, when the user touches and selects "CANCEL" in the pop-up menu, the display screen returns to the screen in the previous step. For example, when the user modifies the location on the screen C-3 and then touches and selects "CANCEL" on the same screen, the display screen returns to the screen C-2 before the location modification. When the user touches and selects "CANCEL" on the screen C-2, the display screen returns to the screen C-1, that is, the state on the screen A-5 in FIG. 15.

The modification of the offshore navigation start location and end location differs from the modification of the berthing/unberthing locations in that "MODIFY AZIMUTH" is not included in the pop-up menu and thus the system does not accept the modification of the azimuth.

### <<4-2-6. Direct Modification>>

In the present embodiment, in addition to the modification of the newly created route SR on the screen A-5 in FIG. 15E, the route displayed in the route display area R6 can be modified (by the generation unit 14b) on the basis of the user's intuitive touch maneuver. Such route modification is herein referred to as direct modification.

### (Direct Modification of WP on Berthing/Unberthing Routes)

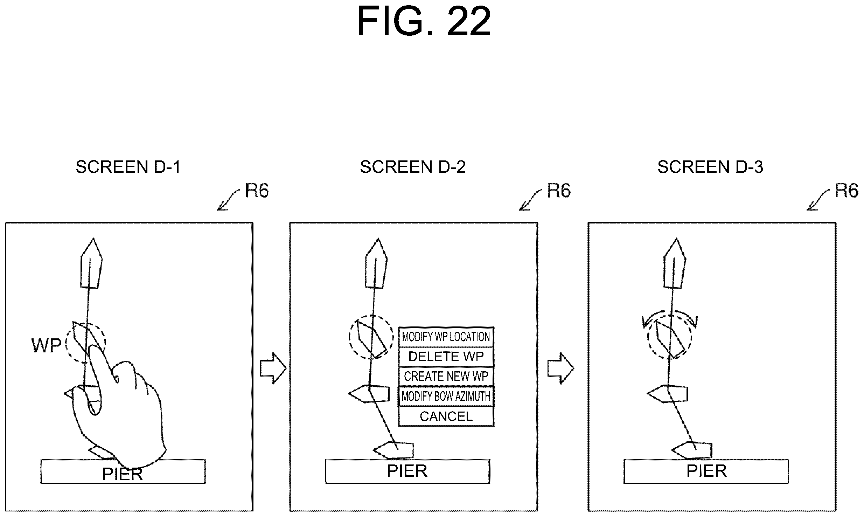

As illustrated in a screen D-1 of FIG. 22, when the user double-taps the WP to be modified on the berthing/unberthing route displayed in the route display area R6, a pop-up menu is displayed near the double-tapped location as illustrated in a screen D-2. The pop-up menu includes items of "MODIFY WP LOCATION", "DELETE WP", "CREATE NEW WP", "SPECIFY BOW AZIMUTH", and "CANCEL".

When the user touches and selects "MODIFY WP LOCATION", the WP to be modified blinks. Then, the location of the WP is modified by dragging the WP. When the user touches and selects "DELETE WP", the WP to be modified is deleted, and the WL connecting the WPs, both of which are next to the deleted WP, is created. When the user touches and selects "CREATE NEW WP", the WP is newly created at an intermediate location between the double-tapped WP and the next WP (the WP on a near side of the berthing location).

When the user touches and selects "SPECIFY BOW AZIMUTH", as illustrated in a screen D-3, an arrow for the azimuth modification that serves as an input window appears. Then, similar to the case of FIG. 20, the user can rotate and modify the bow azimuth in the right direction or the left direction by moving the finger clockwise or counterclockwise while touching the bow of the ship-shaped icon. In FIG. 22, the ship-shape icon after the modification is not illustrated. However, FIG. 22 is also similar to FIG. 20 in that the ship-shaped icon before the modification is displayed in the light color and that the ship-shape icon after the modification is displayed in the dark color and superimposed on the ship-shaped icon before the modification.

When the user touches and selects "CANCEL", the pop-up menu is no longer displayed, the display screen returns to the display of the route before the modification.

### (Direct Modification of WL on Berthing/Unberthing Route)

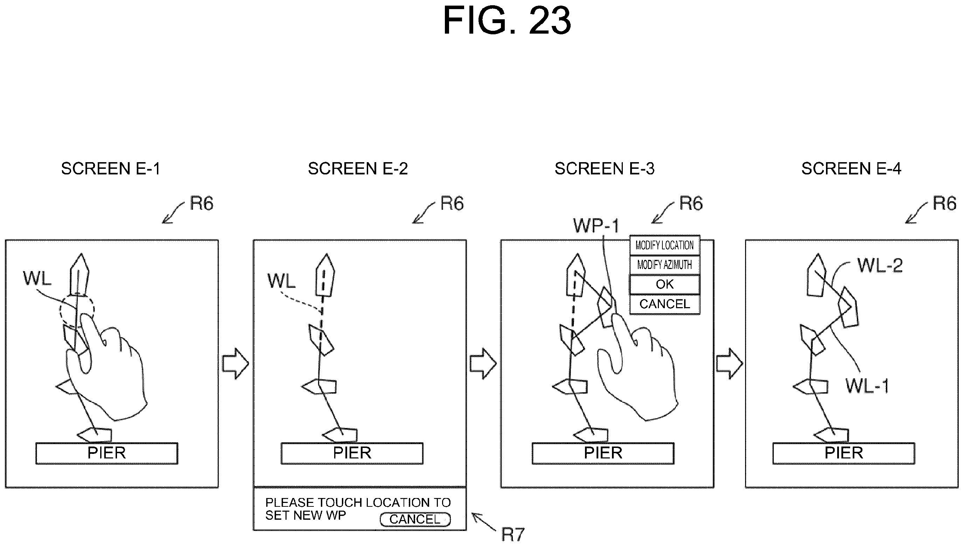

As illustrated in a screen E-1 of FIG. 23, when the user double-taps the WL to be modified on the berthing/unberthing route displayed in the route display area R6, the WL at the the double-tapped location is displayed in a different color (for example, red) from the other WLs as illustrated in a screen E-2. On the screen E-2, the WL at the double-tapped location is indicated by a broken line. Then, a message that prompts the user to touch a location for newly setting the new WP is displayed in the risk prediction display area R7. When the user touches the location for newly setting the WP, as illustrated in a screen E-3, a new WP (denoted by WP-1) is displayed at the touched location on the screen, and a pop-up menu is displayed near the touched location.

The pop-up menu includes items of "MODIFY LOCATION", "MODIFY AZIMUTH", "OK", and "CANCEL". When the user touches and selects "OK", as illustrated in a screen E-4, the new WP is confirmed, and WLs (denoted by WL-1, WL-2), each of which connects the confirmed new WP and respective one of the WPs on front and rear sides of the confirmed new WP, is created. That is, the original WL is modified.

The behavior at the time when the user touches "MODIFY LOCATION" or "MODIFY AZIMUTH", that is, a method for modifying the location or the azimuth of the WP to be newly set is executed in a similar manner to the method executed in the case of modifying the berthing/unberthing locations during the creation of the new route, which has been described with reference to FIG. 19 and FIG. 20.

### (Direct Modification of WP on Offshore Navigation Route)

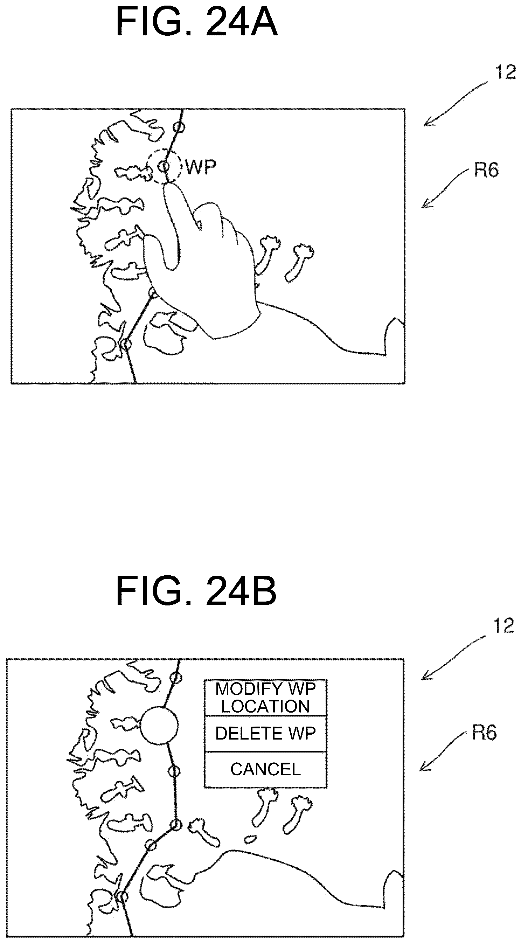

As illustrated in FIG. 24A, when the user double-taps the WP to be modified on the offshore navigation route displayed in the route display area R6, a pop-up menu is displayed near the double-tapped location as illustrated in FIG. 24B. The pop-up menu includes items of "MODIFY WP LOCATION", "DELETE WP", and "CANCEL".

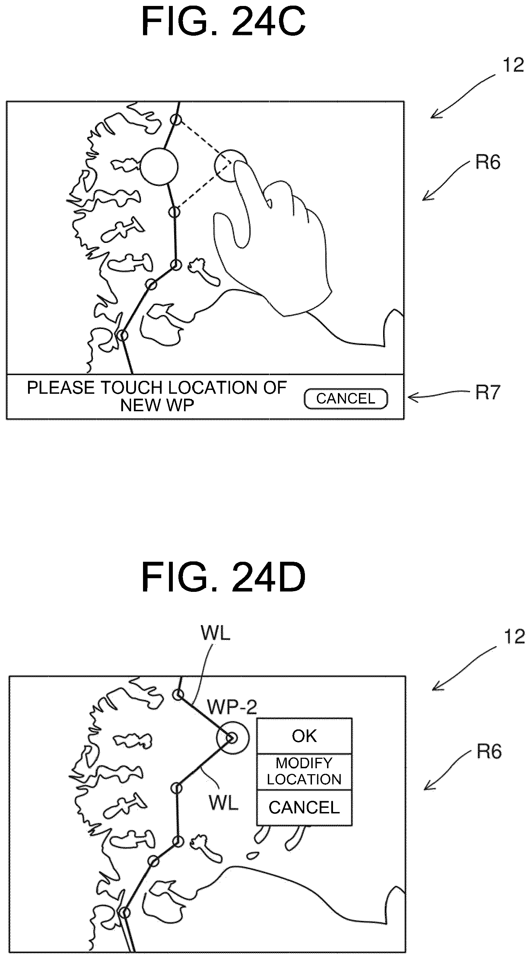

When the user touches and selects "MODIFY WP LOCATION", the WP to be modified blinks. Then, as illustrated in FIG. 24C, a message that prompts the user to touch a location of the new WP is displayed in the risk prediction display area R7. When the user touches an appropriate point on the screen, as illustrated in FIG. 24D, a new WP (denoted by WP-2) is displayed at the touched location on the screen, and a pop-up menu is displayed near the touched location. The pop-up menu at this time includes items of "OK", "MODIFY LOCATION", and "CANCEL".

When the user touches and selects "OK" on the screen in FIG. 24D, the new WP is confirmed, and the WP to be modified is replaced with the new WP. That is, the location of the WP to be modified is modified. Then, the WLs, each of which connects the new WP and respective one of the WPs on the front and rear sides of the new WP, is created.

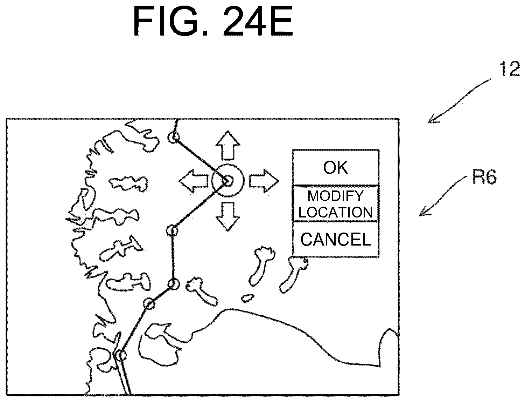

When the user touches and selects "MODIFY LOCATION" on the screen in FIG. 24D, the cross cursor appears on the screen as illustrated in FIG. 24E. The location of the new WP is finely adjusted vertically and horizontally by touching the appropriate key of the cross cursor. Thereafter, when the user touches and selects "OK", the new WP is confirmed, and the new WLs are created as in the above case.

When the user touches and selects "CANCEL" on the screen in FIG. 24D or FIG. 24E, the display screen returns to the screen in FIG. 24C. When the user touches the cancel button on the screen in FIG. 24C, the display screen returns to the screen in FIG. 24B. When the user touches the cancel button on the screen in FIG. 24B, the display screen returns to the screen in FIG. 24A, that is, the normal route display screen.

### (Direct Modification of WL on Offshore Navigation Route)

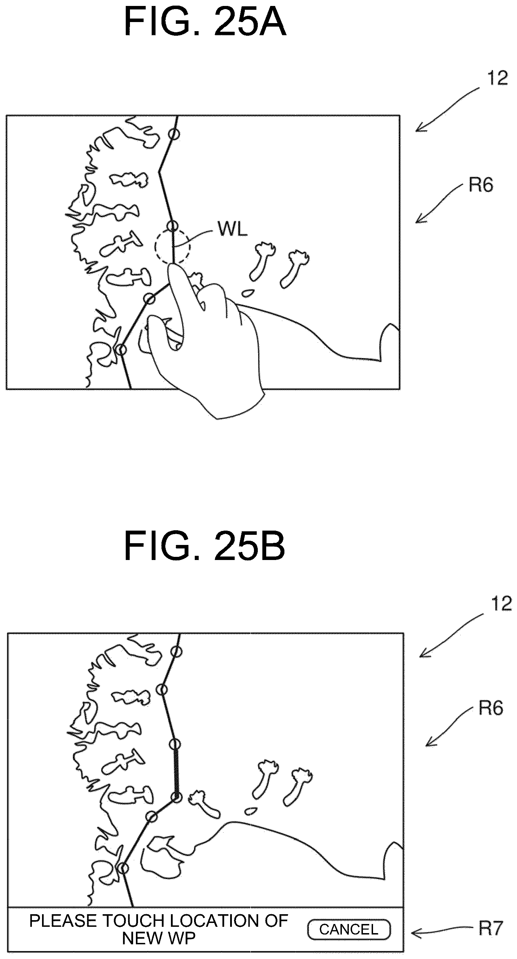

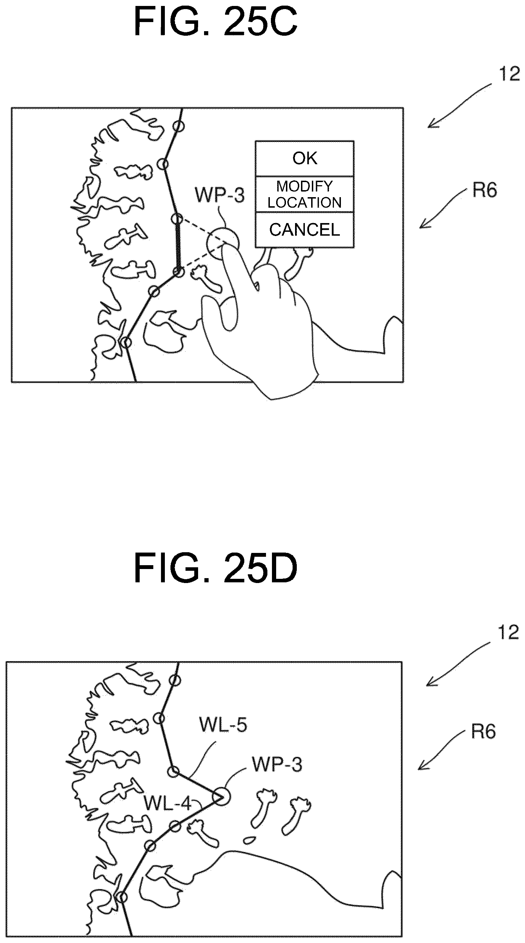

As illustrated in FIG. 25A, when the user double-taps the WL to be modified on the offshore navigation route displayed in the route display area R6, the WL at the double-tapped location is displayed in a different color (for example, red) from the other WLs as illustrated in FIG. 25B. In FIG. 25B, the WL at the double-tapped location is indicated by a bold line. Then, a message that prompts the user to touch a location for newly setting the new WP is displayed in the risk prediction display area R7. When the user touches the location for newly setting the WP, as illustrated in FIG. 25C, a new WP (denoted by WP-3) is displayed at the touched location on the screen, and a pop-up menu is displayed near the touched location.

The pop-up menu includes items of "OK", "MODIFY LOCATION", and "CANCEL". When the user touches and selects "OK", the new WP is confirmed.
Then, as illustrated in FIG. 25D, WLs (denoted by WL-3, WL-4), each of which connects the confirmed new WP and respective one of the WPs on front and rear sides of the confirmed new WP, are created. That is, the original WL is modified.

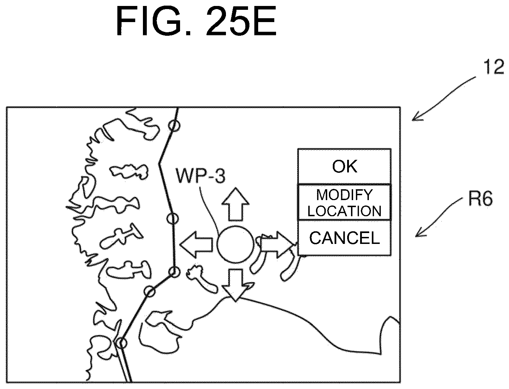

When the user touches and selects "MODIFY LOCATION" on the screen in FIG. 25C, the cross cursor appears on the screen as illustrated in FIG. 25E. The location of the new WP is finely adjusted vertically and horizontally by touching the appropriate key of the cross cursor. Thereafter, when the user touches and selects "OK", the new WP is confirmed. Then, similar to FIG. 25D, the WLs, each of which connects the newly confirmed WP and respective one of the WPs on the front and rear sides of the newly confirmed WP, is created.

When the user touches and selects "CANCEL" in the pop-up menu on the screen in FIG. 25C or FIG. 25E, or when the user touches the cancel button on the screen in FIG. 25B, the display screen returns to the screen in FIG. 25A, that is, the normal route display screen.

As it has been described so far, when the user touches the screen, that is, when the input unit 11b accepts the user's input, only the WP as a modification target is modified. Thus, the processing becomes simpler than a method for deleting all the WPs and creating the route again from the beginning, for example. In this respect, as in the present embodiment, the generation unit 14b desirably modifies the WP as the via-point on the route SR on the basis of the input to the input unit 11b.

In addition, even when it is desired to add the new WP (for example, WP-1 to WP-3 in the above-described example) to the route between the adjacent WPs on the route SR, the new WP is added by accepting the input to the input unit 11b while the other WPs remain. Thus, also in this case, the processing becomes simpler than the method for deleting all the WPs and creating the route again from the beginning, for example. In this respect, as in the present embodiment, the generation unit 14b desirably adds the new WP to the route between the adjacent WPs on the route SR on the basis of the input to the input unit 11b.

In the modification of the offshore navigation route illustrated in FIG. 24A to FIG. 25E, "MODIFY AZIMUTH" is not included in the pop-up menu on the display screen. In the offshore navigation, as long as the watercraft 100 is navigated along the generated route SR, it is not assumed that the azimuth of the watercraft 100 is changed on the route SR. Accordingly, in regard to the WP on the offshore navigation route SR, the user does not have to perform an extra maneuver related to the change of the azimuth of the watercraft 100 by prohibiting selection of "MODIFY AZIMUTH" by the user. In this respect, as in the present embodiment, it is desirable that the display control unit 14c does not display, on the display unit 12, a selection screen for inputting the change of the azimuth of the watercraft 100 at the WP on the offshore navigation route SR, which is included in the route SR, by using the input unit 11b.

### (4-3. Setting of Navigation Prohibition Area)

When the navigation prohibition area setting switch SW7 is touched in the control panel display area R4 illustrated in FIG. 2 and FIG. 4, a navigation prohibition area setting mode is initiated, and the display in the risk prediction display area R7 is replaced with a navigation prohibition area setting menu.

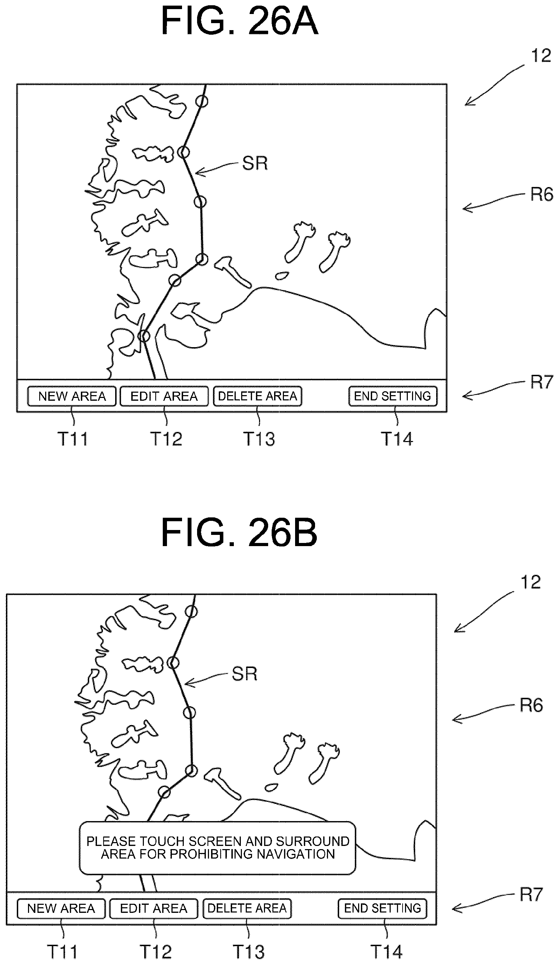

FIG. 26A is an explanatory view schematically illustrating each of the display screens of the route display area R6, in which the nautical chart and the route are displayed, and the risk prediction display area R7, in which the navigation prohibition area setting menu is displayed.
The navigation prohibition area setting menu includes a new area creation tab T11, an area editing tab T12, an area delete tab T13, and a setting end tab T14.

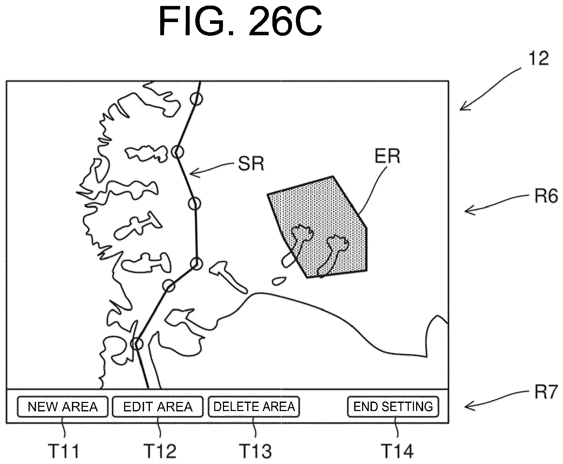

When the user touches the new area creation tab T11 on the screen in FIG. 26A, a message that prompts the user to touch the screen in a manner to surround an area for prohibiting the navigation is displayed as illustrated in FIG. 26B. When the user follows the message, moves the finger on the screen to surround and specify the desired area, and then touches the setting end tab T14, as illustrated in FIG. 26C, the specified area is confirmed as a navigation prohibition area ER. Then, the navigation prohibition area setting mode is terminated, and the display in the risk prediction display area R7 returns to the display of the risk illustrated in FIG. 7.

When the user touches the area editing tab T12 on the screen in FIG. 26A, the navigation prohibition area, which is set in the nautical chart, blinks. When the user touches and selects the desired navigation prohibition area, a mode is shifted to an editing mode, and the selected navigation prohibition area can be edited (modified). For example, the user can modify the navigation prohibition area by dragging an outline of the selected navigation prohibition area.

When the user touches the area delete tab T13 on the screen in FIG. 26A, the navigation prohibition area set in the nautical chart blinks. When the user touches and selects the desired navigation prohibition area, the selected navigation prohibition area is deleted.

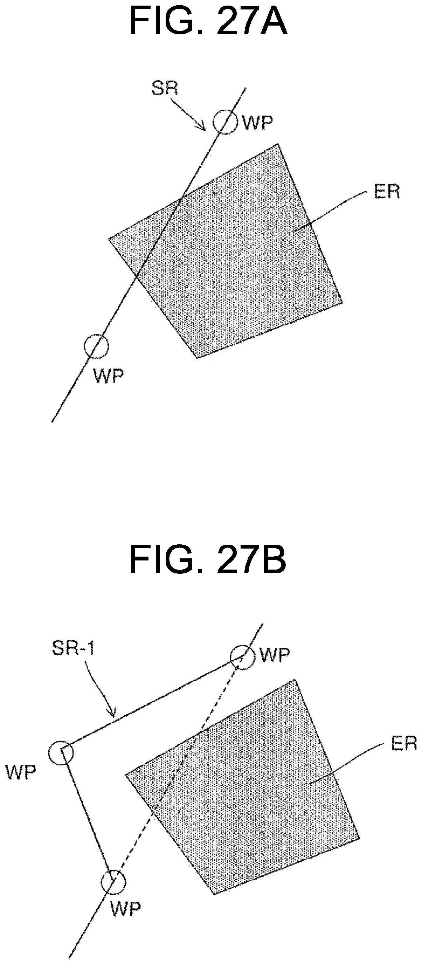

By the way, as illustrated in FIG. 27A, there is a case where the route SR, which is generated by the generation unit 14b, overlaps the set or modified navigation prohibition area ER due to the setting or the modification of the navigation prohibition area ER. In this case, as illustrated in FIG. 27B, the generation unit 14b automatically generates an avoidance route SR-1 for avoiding the set or modified navigation prohibition area ER. The avoidance route SR-1 is generated as a route that is away from the navigation prohibition area ER by a predetermined distance or longer, and the predetermined distance can be set appropriately.

From a perspective of realizing the automatic navigation that avoids the navigation prohibition area ER, the generation unit 14b desirably generates the avoidance route SR-1 as described above. That is, when the input unit 11b accepts the input (including the setting and the modification) of the navigation prohibition area ER, the generation unit 14b desirably creates, as the new route, the avoidance route SR-1 for avoiding the navigation prohibition area ER.

### (4-4. Generation of Avoidance Route Based on Detection of Obstacle)

In the present embodiment, in the case where the obstacle is present in front during the automatic navigation on the set route, and the risk of the collision becomes equal to or higher than a reference, the generation unit 14b automatically generates the avoidance route and displays the generated avoidance route on the screen for suggestion to the user. Hereinafter, behavior based on detection of the obstacle will be described.

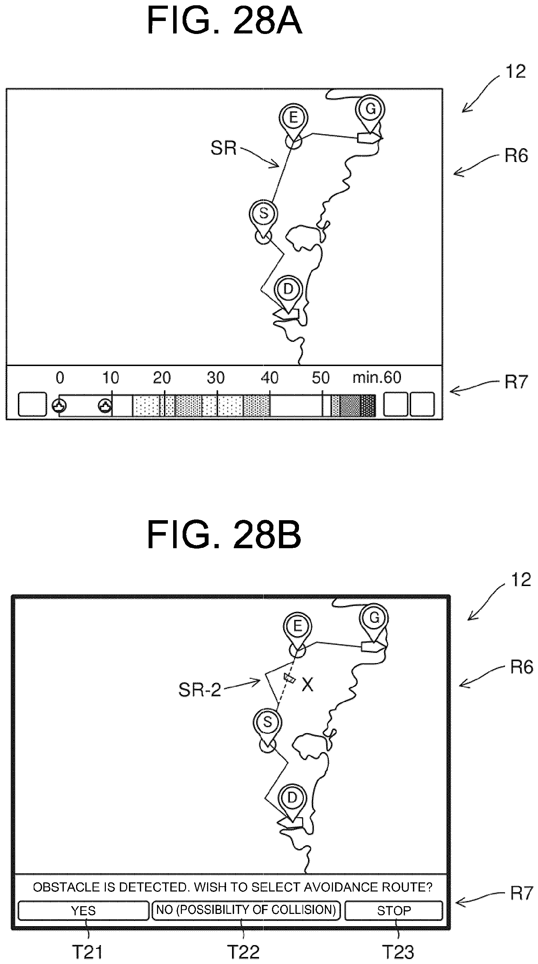

First, it is assumed that a screen in FIG. 28A is displayed in the route display area R6 and the risk prediction display area R7 of the display unit 12 during normal navigation. In the case where the obstacle detection unit 30 (see FIG. 1) detects presence of an obstacle X on the route SR, and the main control unit 14a determines a high possibility of the collision (for example, the risk in FIG. 8 is 4 or higher) with continuation of the current navigation, the generation unit 14b generates an avoidance route for avoiding the obstacle X. The generated avoidance route is displayed on the screen of the display unit 12.
FIG. 28B illustrates an avoidance route SR-2 that is generated by the generation unit 14b and displayed on the display unit 12.

The avoidance route SR-2 is generated by setting a new WP at a point away from the obstacle X by a predetermined distance or longer in a perpendicular direction to the closest WL to the obstacle X and then connecting the new WP and each of the WPs on the front and rear sides of the new WP, for example.

When the avoidance route SR-2 is displayed, in addition to the above, an outer frame that integrally surrounds the route display area R6 and the risk prediction display area R7 is displayed in red and blinks. In addition, a selection tab of whether to select the avoidance route SR-2 is displayed in the risk prediction display area R7. The selection tabs include a "YES" tab T21 for selecting the avoidance route SR-2 and a "NO" tab T22 for not selecting the avoidance route SR-2. Furthermore, a "STOP" tab T23 for instructing to stop the watercraft is displayed in the risk prediction display area R7.

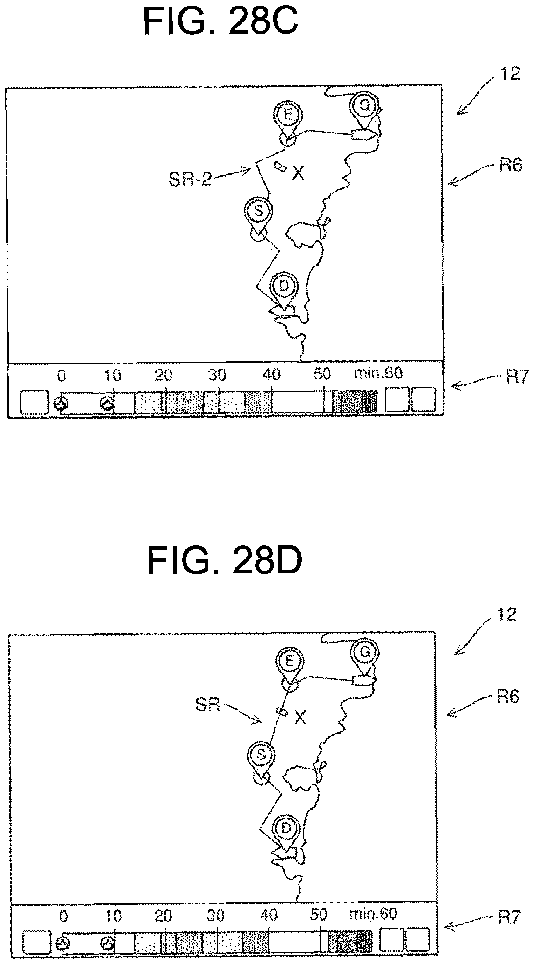

When the user touches the "YES" tab T21 on the screen in FIG. 28B, the avoidance route SR-2 is selected. Then, as illustrated in FIG. 28C, the avoidance route SR-2 is displayed on the display unit 12 (in the route display area R6), and the watercraft 100 is automatically navigated along the avoidance route SR-2. At this time, the blinking display of the red frame disappears, and the risk prediction display area R7 returns to the original display of the risk. When the avoidance route SR-2 is selected, in order to avoid frequent suggestion of the avoidance route, the generation unit 14b does not generate or suggest the avoidance route for a predetermined time. For example, the predetermined time is 60 seconds but can be set appropriately.

When the user touches the "NO" tab T22 on the screen in FIG. 28B, the avoidance route SR-2 is not selected. Then, as illustrated in FIG. 28D, the original route SR is displayed on the display unit 12 (in the route display area R6), and the watercraft 100 is automatically navigated along the route SR. It is also assumed that the obstacle detection unit 30 makes erroneous detection. Thus, in the case where the user visually checks presence or absence of the obstacle X in front and determines that the risk of the collision is low, the user only needs to touch the "NO" tab T22.

Also, when the "NO" tab T22 is touched, the blinking display of the red frame disappears, and the risk prediction display area R7 returns to the original display of the risk. In order to avoid the frequent suggestion of the avoidance route, the generation unit 14b does not generate or suggest the avoidance route for a predetermined time. For example, the predetermined time is 10 seconds but can be set appropriately.

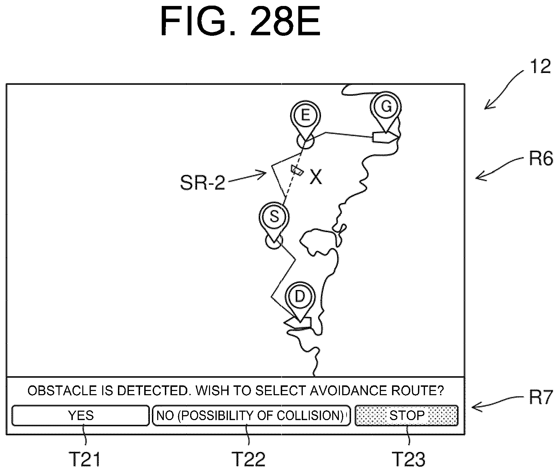

When the user touches the "STOP" tab T23 on the screen in FIG. 28B, the watercraft 100 is stopped on the spot for the user to check a situation for a while. At this time, as illustrated in FIG. 28E, the blinking display of the red frame on the display unit 12 disappears. In addition, the "STOP" tab T23 is grayed out and can no longer be selected even when the "STOP" tab T23 is touched.

When the user touches the "YES" tab T21 on the screen in FIG. 28E, the avoidance route SR-2 is selected, and the display screen is switched to that in FIG. 28C. Meanwhile, when the user touches the "NO" tab T22 on the screen in FIG. 28E, the avoidance route SR-2 is not selected, and the display screen is switched to that in FIG. 28D.

When the avoidance route SR-2 is displayed on the display unit 12, the user can look at the avoidance route SR-2 displayed on the display unit 12 and make an instruction input for selecting the avoidance route SR-2 to the input unit 11b as necessary. From a perspective of enabling such a response, in the case where the risk prediction unit 14d determines that the risk is equal to or higher than the reference, the generation unit 14b desirably generates the avoidance route SR-2, and the display control unit 14c desirably displays the avoidance route SR-2 on the display unit 12.

### (4-5. Display of Moving Image of Route)

In the present embodiment, the display control unit 14c may display, on the display unit 12 (for example, in the route display area R6), a moving image (a demonstration moving image or a demonstration screen), which serves as a demonstration when the watercraft 100 is navigated on the set or selected route SR, in response to the user's touch maneuver (acceptance of the input to the input unit 11b).

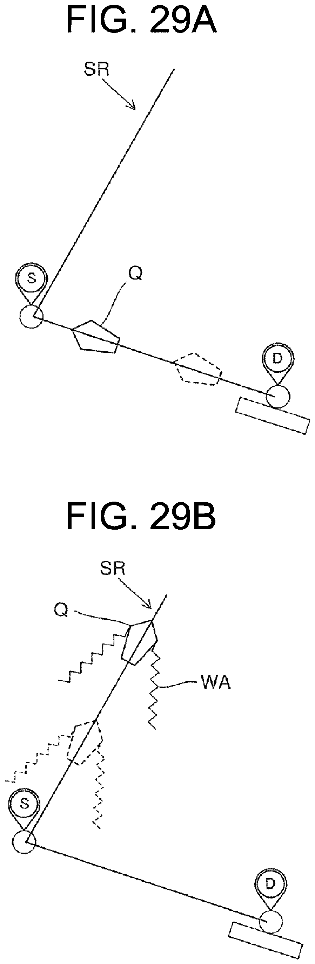

FIG. 29A schematically illustrates the demonstration moving image during the navigation of the watercraft 100 in the unberthing section of the route SR from the unberthing location to the berthing location. A ship-shaped icon Q that is indicated by a solid line schematically indicates to be temporally later than a ship-shaped icon indicated by a broken line.

FIG. 29B schematically illustrates the demonstration moving image during the navigation of the watercraft 100 in an offshore navigation section after the navigation in the unberthing section. The ship-shaped icon Q indicated by the solid line is the same as that in the case of FIG. 29A in a point of being temporally later than the ship-shaped icon indicated by the broken line.

By checking the route SR in the moving image, the user may notify a discrepancy of the route SR (difference from the imaged route) that is not easily noticed in a still image. In this respect, the display of the demonstration moving image of the route SR is significantly effective.

In addition, when the user checks the route SR in the displayed demonstration moving image, it is desirable that the user can clearly distinguish and recognize the unberthing section and the offshore navigation section from each other. In this respect, as illustrated in FIG. 29B, in the demonstration moving image displayed on the display unit 12, it is desirable to display the navigation of the watercraft 100 in the offshore navigation section, which is included in the route SR, by the ship-shaped icon Q accompanied with a ship wave WA.

### [5. Display of Risk Information in Bird's-Eye View]

As in the present embodiment, three-dimensional information of the obstacle can be acquired by the configuration including the 3D-LiDAR 23 (see FIG. 1) as the obstacle detection unit 30. Accordingly, the risk prediction unit 14d can predict the risk three-dimensionally on the basis of the three-dimensional obstacle information that is output from the obstacle detection unit 30 and acquired by the acquisition unit 11 (the communication unit 11a).

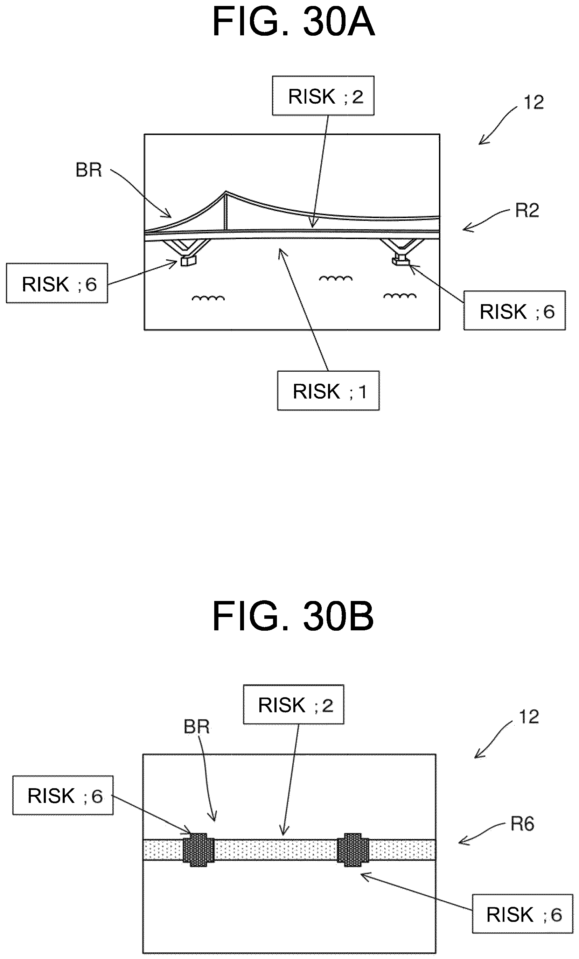

For example, FIG. 30A illustrates a state where an image acquired by the appropriate telescopic camera 22 included in the obstacle detection unit 30 is displayed in the representative image display area R2 of the display unit 12. The image includes a road bridge BR that is installed on the sea as an example of the obstacle.

In addition, the degree (a level) of the risk that is predicted by the risk prediction unit 14d is indicated by one of the six stages in FIG. 8 for convenience. In the example of FIG. 10, it is predicted that the risk of the collision is the highest (for example, the risk: 6) in a pier portion of the road bridge BR. There is the risk of the collision in a bridge girder portion that connects between the bridge piers. However, since the bridge girder portion is located high above a sea surface, it is predicted that the risk of the collision with the bridge girder portion is lower (for example, the risk: 2) than that with the bridge pier. Meanwhile, since the obstacle does not exist between the bridge girder and the sea surface, it is predicted that the risk of the collision therebetween is the lowest (for example, the risk: 1).

The display control unit 14c can create a bird's-eye view from the image, which is acquired by the telescopic camera 22 as the obstacle detection unit 30, by software processing and can display the bird's-eye view on the display unit 12. FIG. 30B illustrates a state where the bird's-eye view of the image illustrated in FIG. 30A is displayed in the route display area R6 of the display unit 12. In FIG. 30B, the road bridge BR is enlarged by pinch-out. In addition, the degrees of the risk predicted by the risk prediction unit 14d are indicated for convenience.

As illustrated in FIG. 30A, in the case where the risk prediction unit 14d predicts the risk, the degree of which differs by location, on the basis of the obstacle information, the display control unit 14c displays the bird's-eye view that includes risk information (here, information on the risk of "6") of the lowest risk and the highest risk among the different degrees of the risk as illustrated in FIG. 30B. Such display control is effective in that the user can easily recognize the location with the really high risk of the collision by looking at the bird's-eye view in FIG. 30B.

In addition, in the example illustrated in FIG. 30A, the degree of the risk differs between the bridge girder and an area below the bridge girder (between the bridge girder and the sea surface). However, in the bird's-eye view of FIG. 30B, the location with the higher risk is displayed as the risk information (here, the information on the risk of "2"). That is, in the case where the risk prediction unit 14d predicts the different degrees of the risk in a height direction of the same location in the bird's-eye view, the display control unit 14c displays the bird's-eye view that includes the risk information of the highest risk in the height direction (here, the information on the risk of "2"). In the case where the degree of risk differs in the height direction of the same location in the bird's-eye view, the user usually wishes to know the information of the higher risk. In this respect, the display control for preferentially displaying the risk information is desirable.

In the example illustrated in FIG. 30A, the risk of the collision differs between the bridge pier and the bridge girder of the road bridge BR. However, in the bird's-eye view of FIG. 30B, a display mode (for example, a display color) is changed between the bridge pier and the bridge girder having the different degrees of the risk. When different pieces of the risk information, the difference of which is indicated by the color (see FIG. 8) according to the degree of the risk, are displayed, the user can easily distinguish and recognize the different pieces of the risk information. In this respect, the display control unit 14c desirably displays the risk information on the display unit 12 in a mode that corresponds to the degree of the risk.

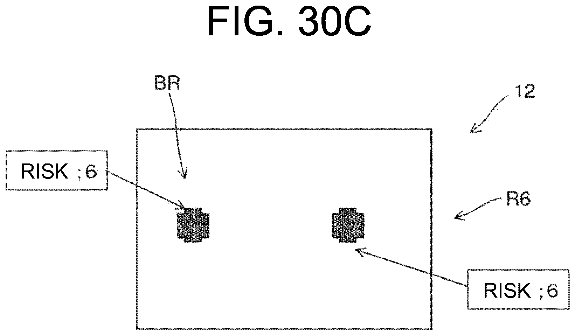

FIG. 30C illustrates another display mode of the bird's-eye view. FIG. 30C illustrates a state where the user performs the touch maneuver to input an instruction of not displaying the risk information, the degree of the risk of which is equal to or lower than a reference (for example, the risk of "2" or lower), and the display control unit 14c then controls the display unit 12 on the basis of the instruction, so as not to display the risk information.

There is low need to display the location with the low risk of the collision, such as the bridge girder, in the bird's-eye view to call the user's attention. From this perspective, it is desirable that the display control unit 14c does not display, on the display unit 12, the risk information, the degree of the risk of which is equal to or lower than the reference, on the basis of the input to the input unit 11b.

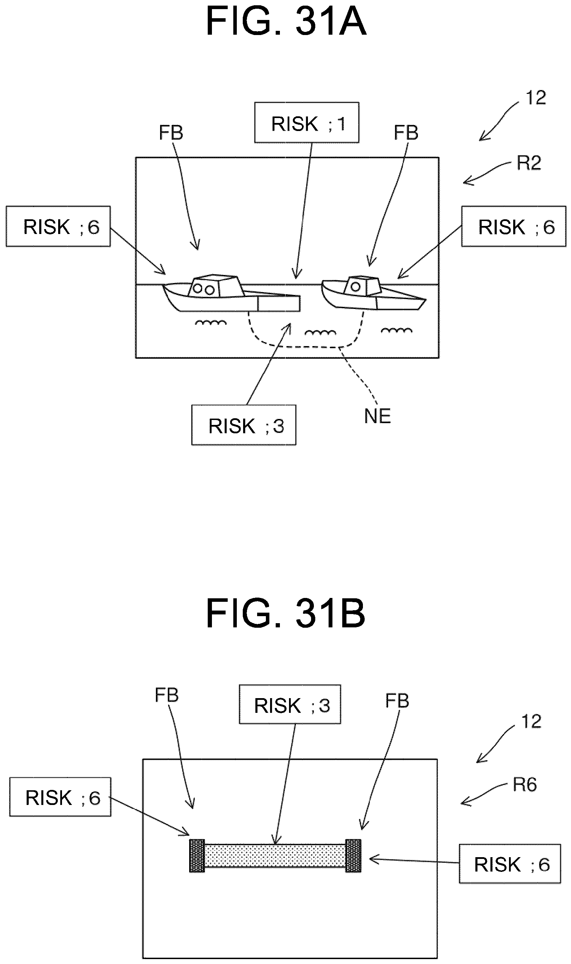

FIG. 31A illustrates another example of the image that is acquired by the appropriate telescopic camera 22 and displayed in the representative image display area R2 of the display unit 12. The image includes two fishing boats FB as other examples of the obstacle. FIG. 31B illustrates a state where the bird's-eye view of the image illustrated in FIG. 31A is displayed in the route display area R6 of the display unit 12. In FIG. 31B, the two fishing boats FB are enlarged by pinch-out. In each of FIG. 31A and FIG. 31B, the degrees of the risk predicted by the risk prediction unit 14d are also indicated for convenience.

Depending on a location or an area of fishing, when the two fishing boats FB are navigated or stopped in parallel, a net NE for catching fish may be spread in the sea water between the two fishing boats FB. Since such a net NE exists in the sea water, it is difficult to detect the net NE by the obstacle detection unit 30 (the 3D-LiDAR 23 and the telescopic camera 22).

In the case where two fishing boats FB are present in parallel, the net NE possibly exists in the sea water between the two fishing boats FB. Thus, the risk prediction unit 14d may determine that the risk of such an area is high. Based on this determination, in the bird's-eye view of FIG. 31B, the display control unit 14c displays each of the two fishing boats FB and the area therebetween with the different pieces of the risk information. The risk of the collision is the highest (the risk is "6") for the two fishing boats FB while the risk of the collision in the area between the two fishing boats FB is lower (the risk is "1") than that for the two fishing boats FB. However, since the risk in the sea water where the net NE is present is 3 and thus differs from the risk in an area above the net NE, that is, there are locations with the different degrees of the risk in the height direction, similar to the case in FIG. 30B, the risk information of the higher risk (the information of the risk "3") is preferentially displayed. Accordingly, the user can recognize that the area between the two fishing boats FB is a dangerous area for the navigation by looking at the bird's-eye view in FIG. 31B.

### [6 Linked Display of Risk Information in Bird's-Eye View and Time-Series Bar]

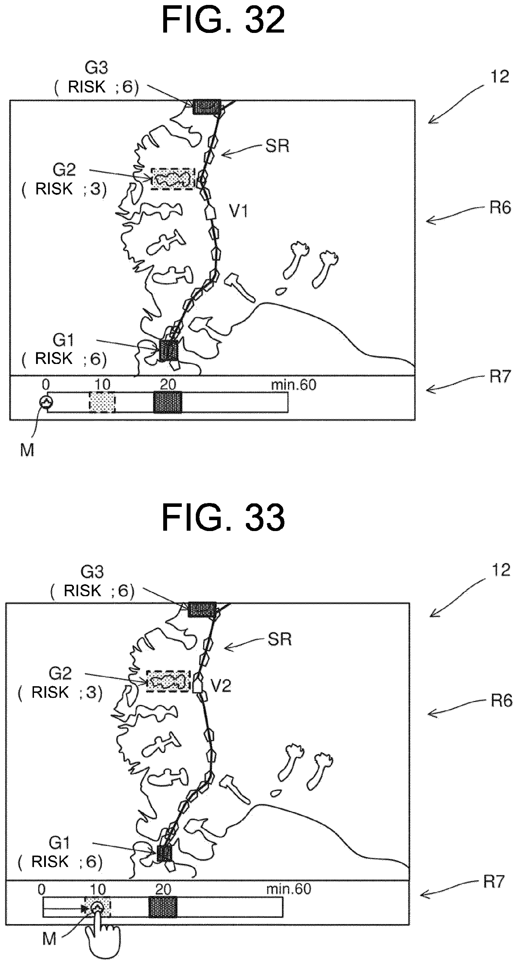

FIG. 32 illustrates a state where the risk information, which is displayed in the bird's-eye view of the route display area R6, is also displayed in the time-series bar of the risk prediction display area R7 in a linked manner on the display unit 12. In an example illustrated in FIG. 32, the current location of the watercraft 100 on the route SR is set as V1, and the risk information in obstacle areas G2, G3, which respectively exist near future (temporally subsequent) locations V2, V3, is displayed in a temporally corresponding manner in the time-series bar of the risk prediction display area R7. Here, the risk information of each of the obstacle areas G2, G3 is information representing the highest risk among the degrees of the risk in respective one of the obstacle areas G2, G3.

In addition, display colors of the risk information displayed in the bird's-eye view match display colors of the risk information displayed in the time-series bar. For example, a color that indicates the risk information of the obstacle area G2 in the bird's-eye view (the color corresponding to the risk 3 in FIG. 8) matches a color that indicates the risk information of the obstacle area G2 in the time-series bar of the risk prediction display area R7. Similarly, a color that indicates the risk information of the obstacle area G3 in the bird's-eye view (the color corresponding to the risk 6 in FIG. 8) matches a color that indicates the risk information of the obstacle area G3 in the time-series bar of the risk prediction display area R7.

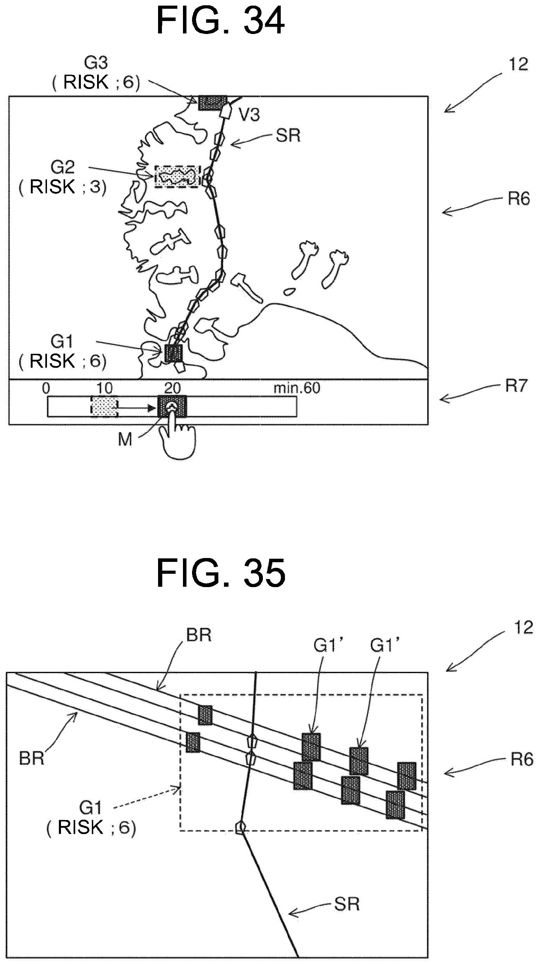

As illustrated in FIG. 33, the user drags and moves the marker M, which indicates the location of the watercraft 100, in the time-series bar of the risk prediction display area R7 to a location corresponding to the future location V2 (for example, 10 minutes after the current time) in the route display area R6. In such a case, the location of the marker M overlaps an area indicating the risk information of the obstacle area G2, which is the closest to the location V2 of the watercraft 100. Meanwhile, as illustrated in FIG. 34, the user drags and moves the marker M, which indicates the location of the watercraft 100, in the time-series bar of the risk prediction display area R7 to a location corresponding to the future location V3 (for example, 20 minutes after the current time) in the route display area R6. In such a case, the location of the marker M overlaps an area indicating the risk information of the obstacle area G3, which is the closest to the location V3 of the watercraft 100.

As described above, when the risk information indicated in the bird's-eye view of the route display area R6 is also displayed in the particular color in the time-series bar of the risk prediction display area R7 in the linked manner, the user can intuitively acknowledge a time range with the high risk (for example, 10 minutes and 20 minutes after the current time in the above example) and the degree of the risk by looking at the time-series bar. Accordingly, from a perspective of improving the user's convenience, in the configuration in which the display control unit 14c displays the risk information in the time-series bar, the display color of the risk information displayed at the appropriate location (the obstacle area) in the bird's-eye view desirably matches the display color of the risk information displayed at the location corresponding to the appropriate location in the time-series bar.

FIG. 35 illustrates a state where the obstacle area G1, which is displayed in the route display area R6 of FIG. 32, is enlarged by pinch-out. As illustrated in FIG. 35, the obstacle area G1 includes areas G1' of plural bridge piers of the two road bridges BR, and the risk information is indicated for each of the areas G1' of the bridge piers (the risk is displayed as 6).

In the enlarged view of the obstacle area G1, the user can recognize each of the plural areas G1', which corresponds to the respective bridge pier, as an area. Thus, even when the risk information is displayed for each of the areas G1' (for example, even when the risk 6 is displayed), the user can recognize the risk for each of the areas G1'. However, as illustrated in FIG. 32, in the view that illustrates the obstacle area G1 in a reduced size, each of the bridge piers may be illustrated almost as a "point", lose a shape, and not be recognized. As a result, even when the risk information is displayed for each of the areas G1', it is difficult for the user to recognize the risk for each of the areas G1'.

Accordingly, in order to allow the user to reliably recognize the risk information of the obstacle area G1, it is desirable to adjust a display size of the risk information according to the scale of the nautical chart displayed on the display unit 12. That is, in the case where the scale of the nautical chart is large as in FIG. 35, the risk information is desirably displayed for each of the areas G1' included in the obstacle area G1. Meanwhile, in the case where the scale of the nautical chart is small as in FIG. 32, the risk information is desirably displayed for the single obstacle area G1 as the collective information for the areas G1'. In other words, the display control unit 14c desirably displays the risk information, which is displayed in the bird's-eye view, in a size based on a hierarchical nautical chart structure (that reflects the scale of the nautical chart).

### [7. Program]

The automatic route generation apparatus 1, which has been described in the present embodiment, can be configured by a computer (PC) in which a predetermined program (application software) is installed, for example. When the computer (for example, the control unit 14) reads and executes the program, each of the units in the automatic route generation apparatus 1 is operated, and thus the processing (each of the steps) described above can be executed. Such a program is downloaded from the outside via a network and stored in the storage unit (for example, the program storage unit 13a), for example. The program may be recorded in a computer-readable recording medium such as a compact disk-read only memory (CD-ROM) or a portable nonvolatile memory, and the program may be read by the computer from this recording medium and stored in the storage unit. That is, the program in the present embodiment is a program for causing the computer to execute the automatic route generation method in the present embodiment.

### [8. Supplementary Description]

The above description has been made so far on the example in which the acquisition unit 11 acquires the berthing location, the unberthing location, the offshore navigation start location, and the offshore navigation end location of the watercraft as the route generation information and the generation unit 14b generates the route. However, the locations that are acquired as the route generation information are not limited to the above examples. For example, a location away from the unberthing location is set as a first point, and a location away from the berthing location is set as a second point. In such a case, even when neither the first location nor the second location is located offshore far away from the land, and the watercraft 100 travels in a section connecting the first point and the second point after being unberthed and is thereafter berthed, it is possible to apply the route generation method that has been described in the present embodiment. The generation of the route that has been described in the present embodiment can be applied not only to the case where the watercraft 100 is unberthed, travels offshore, and is then berthed but also to the case where the watercraft 100 is unberthed, travels on the route near the land, and is then berthed. Thus, the "offshore navigation start location" and the "offshore navigation end location" that are included in the route generation information described in the present embodiment can be read as the "first point away from the unberthing location" and the "second point away from the berthing location", respectively.

### [9. Supplementary Notes]

The automatic route generation apparatus, the automatic route generation method, the automatic route generation program, and the watercraft that have been described in the present embodiment can also be expressed as follows.

An automatic route generation apparatus of Supplementary Note (1) includes:
an acquisition unit that acquires route generation information including a berthing location, an unberthing location, a first point away from the unberthing location, and a second point away from the berthing location of a watercraft; and
a generation unit that generates a route of the watercraft on the basis of the route generation information acquired by the acquisition unit.

In an automatic route generation apparatus of Supplementary Note (2) according to the automatic route generation apparatus of Supplementary Note (1),
the acquisition unit includes an input unit that accepts an input by a user, and
the input unit accepts at least one of inputs of the berthing location, the unberthing location, the first point, and the second point.

In an automatic route generation apparatus of Supplementary Note (3) according to the automatic route generation apparatus of Supplementary Note (2),
the acquisition unit includes the input unit that accepts the input by the user, and
the input unit accepts an input of each of the berthing location, the unberthing location, the first point, and the second point.

In an automatic route generation apparatus of Supplementary Note (4) according to the automatic route generation apparatus of Supplementary Note (3),
the generation unit generates the route on the basis of the inputs of the berthing location, the unberthing location, the first point, and the second point in this order to the input unit.

In an automatic route generation apparatus of Supplementary Note (5) according to the automatic route generation apparatus of any one of Supplementary Notes (2) to (4),
when the input unit accepts an input of a navigation prohibition area, the generation unit generates an avoidance route for avoiding the navigation prohibition area as the route.

In an automatic route generation apparatus of Supplementary Note (6) according to the automatic route generation apparatus of any one of Supplementary Notes (2) to (5),
the generation unit modifies a via-point on the route on the basis of an input to the input unit.

In an automatic route generation apparatus of Supplementary Note (7) according to the automatic route generation apparatus of any one of Supplementary Notes (2) to (6),
the generation unit adds a new via-point between adjacent via-points on the route on the basis of an input to the input unit.

An automatic route generation apparatus of Supplementary Note (8) according to the automatic route generation apparatus of any one of Supplementary Notes (2) to (7) further includes:
a display unit; and a display control unit that controls display on the display unit, in which
the display control unit displays the route generated by the generation unit on the display unit.

In an automatic route generation apparatus of Supplementary Note (9) according to the automatic route generation apparatus of Supplementary Note (8),
the display control unit displays the route and an attitude of the watercraft on the route by an icon on the display unit.

In an automatic route generation apparatus of Supplementary Note (9) according to the automatic route generation apparatus of Supplementary Note (10),
when the input unit accepts an input to modify the attitude, the display control unit displays, on the display unit, a new icon indicating the attitude after modification and the old icon indicating the attitude before the modification in a superimposed manner.

In an automatic route generation apparatus of Supplementary Note (11) according to the automatic route generation apparatus according to any one of Supplementary Notes (8) to (10),
the display control unit does not display, on the display unit, a selection screen on which a change in an orientation of the watercraft at a via-point on an offshore navigation route included in the route is input through the input unit.

An automatic route generation apparatus of Supplementary Note (12) according to the automatic route generation apparatus of any one of Supplementary Notes (8) to (11) further includes:
a route storage unit that stores the route generated by the generation unit, in which
the display control unit displays, on the display unit, a route history screen showing history of the route stored in the route storage unit according to an input to the input unit.

In an automatic route generation apparatus of Supplementary Note (13) according to the automatic route generation apparatus of Supplementary Note (12),
the route storage unit stores, as a registered route, a predetermined route, registration of which is selected by the input unit, of the plural routes displayed as the history on the route history screen.

An automatic route generation apparatus of Supplementary Note (14) according to the automatic route generation apparatus according to any one of Supplementary Notes (8) to (13) further includes:
a risk prediction unit that predicts risk of a collision of the watercraft with an obstacle, in which
the risk prediction unit predicts the risk on the basis of obstacle information that is output from an obstacle detection unit mounted on the watercraft and is acquired by the acquisition unit,
the generation unit generates an avoidance route to avoid the collision with the obstacle when the risk prediction unit predicts that the risk is equal to or higher than a reference, and
the display control unit displays the avoidance route on the display unit.

In an automatic route generation apparatus of Supplementary Note (15) according to the automatic route generation apparatus of any one of Supplementary Notes (8) to (14),
the display control unit displays, on the display unit, a moving image that serves as a demonstration during navigation of the watercraft on the route generated by the generation unit, on the basis of a maneuver of the input unit, and displays, in the moving image, the navigation of the watercraft by an icon accompanied with a ship wave in an offshore navigation section included in the navigation.

An automatic route generation apparatus of Supplementary Note (16) according to the automatic route generation apparatus of any one of Supplementary Notes (8) to (13) further includes:
a risk prediction unit that predicts risk of a collision of the watercraft with an obstacle, in which
the risk prediction unit predicts the risk on the basis of obstacle information that is output from an obstacle detection unit mounted on the watercraft and is acquired by the acquisition unit,
the display control unit displays a bird's-eye view of the obstacle on the display unit and displays risk information on a degree of the risk, included in the bird's-eye view, and
in the case where the risk prediction unit predicts the risk, a degree of which differs by location, on the basis of the obstacle information, the display control unit displays the bird's-eye view including the risk information representing the highest risk.

In an automatic route generation apparatus of Supplementary Note (17) according to the automatic route generation apparatus of Supplementary Note (16),
in the case where the risk prediction unit predicts the risk, the degree of which differs in a height direction at the same location in the bird's-eye view, the display control unit displays the bird's-eye view including the risk information representing the highest risk in a height direction.

In an automatic route generation apparatus of Supplementary Note (18) according to the automatic route generation apparatus of Supplementary Note (17),
the display control unit does not display, on the display unit, the risk information, the degree of the risk of which is equal to or lower than a reference, on the basis of the input to the input unit.

In an automatic route generation apparatus of Supplementary Note (19) according to the automatic route generation apparatus of any one of Supplementary Notes (16) to (18),
the display control unit displays the risk information in a mode corresponding to the degree of the risk.

In an automatic route generation apparatus of Supplementary Note (20) according to the automatic route generation apparatus of any one of Supplementary Notes (16) to (19),
the display control unit further displays the risk information in a time-series bar, and
a display color of the risk information displayed at an appropriate location in the bird's-eye view matches a display color of the risk information displayed at a location corresponding to the appropriate location in the time-series bar.

In an automatic route generation apparatus of Supplementary Note (21) according to the automatic route generation apparatus of any one of Supplementary Notes (16) to (20),
the display control unit displays the risk information in a size based on a hierarchical nautical chart structure in the bird's-eye view.

An automatic route generation method of Supplementary Note (22) includes:
an acquisition step of acquiring route generation information by an acquisition unit, the route generation information including a berthing location, an unberthing location, a first point away from the unberthing location, a second point away from the berthing location of a watercraft; and
a route generation step of generating a route of the watercraft by a generation unit on the basis of the route generation information acquired by the acquisition unit.

An automatic route generation program of Supplementary Note (23) is a program that causes a computer to execute the automatic route generation method of Supplementary Note (22).

A watercraft of Supplementary Note (24) includes the automatic route generation apparatus of any one of Supplementary Notes (1) to (21).

The embodiment of the present invention has been described so far. However, the scope of the present invention is not limited thereto and can be expanded or modified within the scope that does not depart from the gist of the present invention.

### INDUSTRIAL APPLICABILITY

The present invention can be used for an automatic navigation system for a watercraft, for example.

### REFERENCE SIGNS LIST

1: Automatic route generation apparatus
11: Acquisition unit
11a: Communication unit (acquisition unit)
11b: Input unit (acquisition unit)
12: Display unit
13b: Route storage unit
14b: Generation unit
14c: Display control unit
14d: Risk prediction unit
21: Acoustic device (obstacle detection unit)
22: Telescopic camera (obstacle detection unit)
23: 3D-LiDAR (obstacle detection unit)
24: Radar (obstacle detection unit)
30: Obstacle detection unit
100: Watercraft
ER: Navigation prohibition area
SR: Route
SR-1: Avoidance route
SR-2: Avoidance route
WA: Ship wave
WP: Way point (via-point)

## Claims

1. An automatic route generation apparatus comprising:
an acquisition unit that acquires route generation information including a berthing location, an unberthing location, a first point away from the unberthing location, and a second point away from the berthing location of a watercraft; and
a generation unit that generates a route of the watercraft on the basis of the route generation information acquired by the acquisition unit.

2. The automatic route generation apparatus according to claim 1, wherein
the acquisition unit includes an input unit that accepts an input by a user, and
the input unit accepts at least one of inputs of the berthing location, the unberthing location, the first point, and the second point.

3. The automatic route generation apparatus according to claim 2, wherein
the input unit accepts the input of each of the berthing location, the unberthing location, the first point, and the second point.

4. The automatic route generation apparatus according to claim 3, wherein
the generation unit generates the route on the basis of the inputs of the berthing location, the unberthing location, the first point, and the second point to the input unit in this order.

5. The automatic route generation apparatus according to claim 2, wherein
when accepting an input of a navigation prohibition area by using the input unit, the generation unit generates an avoidance route for avoiding the navigation prohibition area as the route.

6. The automatic route generation apparatus according to claim 2, wherein
the generation unit modifies a via-point on the route on the basis of the input to the input unit.

7. The automatic route generation apparatus according to claim 2, wherein
the generation unit adds a new via-point between adjacent via-points on the route on the basis of the input to the input unit.

8. The automatic route generation apparatus according to claim 2 further comprising:
a display unit; and
a display control unit that controls display on the display unit, wherein
the display control unit displays the route generated by the generation unit on the display unit.

9. The automatic route generation apparatus according to claim 8, wherein
the display control unit displays the route and an attitude of the watercraft on the route by icons on the display unit.

10. The automatic route generation apparatus according to claim 9, wherein
when the input unit accepts an input to modify the attitude, the display control unit displays, on the display unit, a new icon indicating the attitude after modification and the old icon indicating the attitude before the modification in a superimposed manner.

11. The automatic route generation apparatus according to claim 8, wherein
the display control unit does not display, on the display unit, a selection screen on which a change in an orientation of the watercraft at a via-point on an offshore navigation route included in the route is input through the input unit.

12. The automatic route generation apparatus according to claim 8 further comprising:
a risk prediction unit that predicts risk of a collision of the watercraft with an obstacle, wherein
the risk prediction unit predicts the risk on the basis of obstacle information that is output from an obstacle detection unit mounted on the watercraft and is acquired by the acquisition unit,
the generation unit generates an avoidance route to avoid a collision with the obstacle when the risk prediction unit predicts the risk that is equal to or higher than a reference, and
the display control unit displays the avoidance route on the display unit.

13. The automatic route generation apparatus according to claim 8 further comprising:
a risk prediction unit that predicts risk of a collision of the watercraft with an obstacle, wherein
the risk prediction unit predicts the risk on the basis of obstacle information that is output from an obstacle detection unit mounted on the watercraft and is acquired by the acquisition unit,
the display control unit displays a bird's-eye view of the obstacle on the display unit and displays risk information on a degree of the risk, included in the bird's-eye view, and
in the case where the risk prediction unit predicts the risk that differs by location on the basis of the obstacle information, the display control unit displays the bird's-eye view including the risk information representing the highest risk.

14. An automatic route generation method comprising:
an acquisition step of acquiring route generation information by an acquisition unit, the route generation information including a berthing location, an unberthing location, a first point away from the unberthing location, and a second point away from the berthing location of a watercraft; and
a route generation step of generating a route of the watercraft by a generation unit on the basis of the route generation information acquired by the acquisition unit.

15. A program causing a computer to execute the automatic route generation method according to claim 14.

16. A watercraft comprising:
the automatic route generation apparatus according to any one of claims 1 to 13.
